# FASCICULE DE BREVET EUROPEEN

(11) **EP 3 658 386 B1**
(45) Date de publication et mention de la délivrance du brevet: **15.01.2025**
(21) Numéro de dépôt: 18758937.9
(22) Date de dépôt: 26.07.2018
(51) Int. Cl.: B60C 1/00, C08L 15/00, C08L 9/06, C08C 19/25

(54) **ELASTOMERE ETENDU A LA RESINE**
HARZERWEITERTES ELASTOMER
RESIN-EXTENDED ELASTOMER

(30) Priorité: 28.07.2017 FR 1757187
(43) Date de publication de la demande: 03.06.2020
(73) Titulaire: Compagnie Générale des Etablissements Michelin, 63000 Clermont-Ferrand (FR)
(72) Inventeur: MATMOUR, Rachid, 63040 Clermont-Ferrand Cedex 9 (FR); VIVIER, Richard, 63040 Clermont-Ferrand Cedex 9 (FR); ABAD, Vincent, 63040 Clermont-Ferrand Cedex 9 (FR)
(74) Mandataire: M.F.P. Michelin
(86) Numéro de dépôt international: PCT/FR2018/051917
(87) Numéro de publication internationale: WO 2019/020948

(56) Documents cités:
- EP-A1- 2 423 252
- WO-A1-2017/165499

## Description

La présente invention est relative à un élastomère étendu à la résine, à son procédé d'obtention et à des compositions de caoutchouc le contenant. Ces compositions de caoutchouc sont notamment utilisables pour la fabrication de pneumatiques.

Depuis que les économies de carburant et la nécessité de préserver l'environnement sont devenues une priorité, il est souhaitable de produire des pneumatiques ayant une résistance au roulement réduite sans pénalisation de ses autres propriétés telles que l'adhérence élevée sur route sèche comme mouillée.

Une façon de réaliser ce compromis de propriétés, en particulier du point de vue de la résistance au roulement et de l'adhérence sur route sèche comme mouillée, consiste à utiliser un fort taux de plastifiants, notamment un fort de taux résines plastifiantes, dans compositions de caoutchouc faiblement hystérétiques ayant pour caractéristique d'être renforcées par des charges inorganiques renforçantes, telle que les silices hautement dispersibles dite « HDS » (Highly Dispersible Silica), capables de rivaliser du point de vue du pouvoir renforçant avec les noirs de carbone conventionnels de grade pneumatique.

Ces compositions sont préparées de manière usuelle en incorporant l'ensemble de leurs constituants dans des mélangeurs. EP2423252 A1 décrit notamment une composition de caoutchouc pour pneumatiques comprenant un polyisoprène synthétique étendu par une résine hydrocarbonée thermoplastique.

Toutefois, l'incorporation de fort taux de résines plastifiantes lors de la fabrication de ces compositions pose des problèmes.

En effet, cette incorporation de fort taux de résines plastifiantes dans une composition de caoutchouc, a pour conséquence une augmentation du pouvoir collant de la composition. Cette augmentation est si importante que la composition de caoutchouc colle aux rotors du mélangeur ou aux divers autres éléments métalliques de la chaîne de mélangeage, empêchant le mélangeur de fonctionner correctement. Il peut ainsi en résulter, une perte matière, c'est-à-dire qu'une partie seulement de la matière introduite dans le mélangeur sort à son extrémité. De plus, très souvent, il est nécessaire d'arrêter le mélangeur pour enlever la composition collée sur les parties métalliques. L'arrêt du mélangeur pour son nettoyage manuel est très pénalisant pour les manufacturiers puis qu'il fait chuter la productivité. Les compositions à fort taux de résines plastifiantes sont donc différemment processables dans les outils habituels de fabrication de compositions de caoutchouc tel que les mélangeurs internes.

Le problème technique que se propose de résoudre l'invention est d'améliorer la processabilité des compositions de caoutchouc ayant de fort taux de résines.

Ce but est atteint en ce que la demanderesse vient de découvrir de manière surprenante au cours de ses recherches que l'utilisation d'un composé spécifique confère aux compositions le contenant une diminution de leur pouvoir collant. Cet composé spécifique améliore la processabilité de telles compositions de caoutchouc.

Ainsi, l'invention a donc pour objet un élastomère étendu à la résine, dont l'élastomère est un élastomère diénique synthétique ayant une masse molaire moyenne en nombre comprise dans un domaine allant de 250000 g/mol à 450000 g/mol et dont la résine est une résine hydrocarbonée plastifiante et dont le taux de résine hydrocarbonée plastifiante est compris dans un domaine allant de 30 à 100 pce, l'élastomère étendu à la résine étant obtenu par mélangeage de l'élastomère diénique synthétique en solution dans un solvant organique et de la résine hydrocarbonée plastifiante à l'état liquide et l'élastomère étendu à la résine présentant un indice de viscosité Mooney supérieur ou égal à 40 UM.

Selon un mode de réalisation préféré, l'élastomère diénique synthétique comprend au moins un monomère diénique conjugué ayant de 4 à 12 atomes de carbone.

Selon un mode de réalisation préféré, le monomère diénique conjugué ayant 4 à 12 atomes de carbone est choisi dans le groupe constitué par le butadiène-1,3, le 2-méthyl-1,3-butadiène, les 2,3-di(alkyle en C₁-C₅)-1,3-butadiènes, le 1,3-pentadiène, le 2,4-hexadiène et les mélanges de ces monomères.

Selon un mode de réalisation préféré, le monomère diénique conjugué ayant 4 à 12 atomes de carbone est choisi dans le groupe constitué par le butadiène-1,3, le 2-méthyl-1,3-butadiène et les mélanges de ces monomères.

Selon un mode de réalisation préféré, l'élastomère diénique synthétique comprend en outre au moins un monomère vinylaromatique ayant de 8 à 20 atomes de carbone.

Selon un mode de réalisation préféré, le monomère vinylaromatique ayant de 8 à 20 atomes de carbone est choisi dans le groupe constitué par le styrène, l'ortho-méthylstyrène, le méta-méthylstyrène, le para-méthylstyrène, le mélange commercial « vinyle-toluène », le para-tertiobutylstyrène, les méthoxystyrènes, les chlorostyrènes, le vinylmésitylène, le divinylbenzène, le vinylnaphtalène et les mélanges de ces monomères.

Selon un mode de réalisation préféré, le monomère vinylaromatique ayant de 8 à 20 atomes de carbone est le styrène et le monomère diénique conjugué ayant 4 à 12 atomes de carbone est le butadiène-1,3.

Selon un mode de réalisation préféré, l'élastomère diénique synthétique est fonctionnalisé par une fonction choisie dans le groupe constitué par les groupes fonctionnels comportant une liaison carbone-étain, les groupes fonctionnels aminés, les groupes fonctionnels comportant un silanol, les groupes fonctionnels comportant un alkoxysilane, les groupes carboxyliques, les groupes polyéthers, les groupes époxydes et les mélanges de ces derniers.

Selon un mode de réalisation préféré, l'élastomère diénique synthétique est obtenu par polymérisation en solution, de préférence par polymérisation en solution homogène.

Selon un mode de réalisation préféré, la résine hydrocarbonée plastifiante a une masse molaire moyenne en nombre comprise entre 400 et 2000 g/mol, de préférence entre 500 et 1500 g/mol.

Selon un mode de réalisation préféré, la résine hydrocarbonée plastifiante est choisie dans le groupe constitué par les résines aliphatiques, les résines aromatiques et les mélanges de ces résines.

Selon un mode de réalisation préféré, la résine hydrocarbonée plastifiante est choisi dans le groupe constitué par les résines d'homopolymères ou copolymères de cyclopentadiène, les résines d'homopolymères ou copolymères de dicyclopentadiène, les résines d'homopolymères ou copolymères de terpène, les résines d'homopolymères ou copolymères de coupe C5, les résines d'homopolymères ou copolymères de coupe C9, les mélange de résines d'homopolymères ou copolymères de coupe C5 et de résines d'homopolymères ou copolymères de coupe C9, les résines d'homopolymères ou copolymères d'alpha-méthyl-styrène et les mélanges de ces résines.

Le taux de résine hydrocarbonée plastifiante est compris dans un domaine allant de 30 à 100 pce, de préférence de 30 à 80 pce.

L'élastomère étendu à la résine est obtenu par mélangeage de l'élastomère diénique synthétique en solution dans un solvant organique et de la résine hydrocarbonée plastifiante à l'état liquide.

Un autre objet de la présente invention concerne un procédé d'obtention dudit élastomère étendu à la résine, le procédé comprenant au moins :
(a) une étape de mise en contact d'au moins un élastomère diénique synthétique en solution dans un solvant organique avec au moins une résine hydrocarbonée plastifiante, ledit élastomère diénique synthétique ayant une masse molaire moyenne en nombre comprise dans un domaine allant de 250000 g/mol à 450000 g/ mol,
(b) une étape de mélange pour obtenir une solution homogène d'élastomère diénique synthétique et de résine hydrocarbonée plastifiante,
(c) une étape de stripping à la vapeur d'eau pour récupérer une fraction gazeuse enrichie en solvant organique et une dispersion aqueuse de particules d'élastomère diénique synthétique et de résine hydrocarbonée plastifiante; et
(d) une étape de récupération de l'élastomère étendu à la résine à partir de la dispersion aqueuse de particules d'élastomère diénique synthétique et de résine hydrocarbonée plastifiante.

Selon un mode de réalisation préféré, le procédé d'obtention comprenant en outre entre l'étape d'élimination du solvant organique (c) et l'étape de séchage (d) au moins une étape (c') de lavage de la dispersion aqueuse de particules d'élastomère diénique synthétique et de résine hydrocarbonée plastifiante.

Selon un mode de réalisation préféré, la fraction gazeuse enrichie en solvant organique est recyclée vers l'étape (a).

Selon un mode de réalisation préféré, l'élastomère diénique synthétique de l'étape (a) est obtenu soit par dissolution dudit élastomère dans le solvant organique soit par polymérisation en solution dans le solvant organique des monomères correspondants dudit élastomère.

Selon un mode de réalisation préféré, lors de la mise en contact à l'étape (a), la résine hydrocarbonée plastifiante est à l'état liquide.

Selon un mode de réalisation préféré, la résine hydrocarbonée plastifiante à l'état liquide est obtenue en chauffant ladite résine à une température supérieure ou égale à sa température de ramollissement.

Selon un mode de réalisation préféré, la résine hydrocarbonée plastifiante à l'état liquide est obtenue en dissolvant ladite résine dans un solvant organique identique ou différent du solvant organique dans lequel se trouve l'élastomère diénique synthétique.

Selon un mode de réalisation préféré, ledit élastomère diénique synthétique a une température de transition vitreuse inférieure ou égale à -60°C, plus préférentiellement comprise dans un domaine allant de -110°C à -60°C, plus préférentiellement allant de -95°C à -65°C.

Selon un mode de réalisation préféré, l'élastomère diénique synthétique comprend au moins un monomère diénique conjugué ayant de 4 à 12 atomes de carbone.

Selon un mode de réalisation préféré, l'élastomère diénique synthétique comprend en outre au moins un monomère vinylaromatique ayant de 8 à 20 atomes de carbone.

Selon un mode de réalisation préféré, l'élastomère diénique synthétique est fonctionnalisé par une fonction choisie dans le groupe constitué par les groupes fonctionnels comportant une liaison carbone-étain, les groupes fonctionnels aminés, les groupes fonctionnels comportant un silanol, les groupes fonctionnels comportant un alkoxysilane, les groupes carboxyliques, les groupes polyéthers, les groupes époxydes et les mélanges de ces derniers.

Selon un mode de réalisation préféré, la résine hydrocarbonée plastifiante a une masse molaire moyenne en nombre comprise entre 400 et 2000 g/mol, de préférence entre 500 et 1500 g/mol.

Selon un mode de réalisation préféré, la résine hydrocarbonée plastifiante a une température de transition vitreuse supérieure ou égale à 20°C, de préférence supérieure ou égale à 30°C.

Un autre objet de la présente invention concerne un élastomère étendu à la résine susceptible d'être obtenu par le procédé défini ci-dessus.

L'élastomère étendu à la résine présente un indice de viscosité Mooney supérieur ou égal à 40 UM, de préférence compris dans un domaine allant de 50 à 75 UM.

De manière surprenante, malgré la haute masse molaire moyenne en nombre de l'élastomère étendu à la résine, celui-ci possède une bonne viscosité Mooney et peut être utilisé dans des compositions de caoutchouc.

Ainsi, un autre objet de la présente invention concerne une composition à base d'au moins un élastomère étendu à la résine tel que défini ci-dessus ou susceptible d'être obtenu selon le procédé décrit ci-dessus et d'au moins une charge renforçante.

Selon un mode de réalisation préféré, la composition comprenant en outre au moins un système de réticulation chimique.

Les compositions de caoutchouc contenant un élastomère étendu à la résine conforme à l'invention présente l'avantage, malgré la présence d'un fort taux de résine plastifiante, d'avoir une capacité de collant sur les outils de mélangeage plus faible que des compositions contenant le même taux de résine plastifiante et un élastomère de même microstructure, non étendu à la résine. L'utilisation de cet élastomère étendu à la résine dans des compositions de caoutchouc permet un gain en productivité de la chaîne de mélangeage ; les arrêts de la chaîne pour nettoyage étant plus limités du fait d'une meilleure processabilité de la composition de caoutchouc contenant un tel composé.

Un autre objet de la présente invention concerne un produit semi-fini pour pneumatique comprenant au moins un élastomère étendu à la résine tel que défini ci-dessus ou susceptible d'être obtenu par le procédé décrit ci-dessus.

Un autre objet de la présente invention concerne un produit semi-fini pour pneumatique comprenant au moins une composition telle que définie ci-dessus.

Un autre objet de la présente invention concerne un pneumatique comprenant au moins un élastomère étendu à la résine tel que défini ci-dessus ou susceptible d'être obtenu par le procédé décrit ci-dessus.

Un autre objet de la présente invention concerne un pneumatique comprenant au moins une composition telle que définie ci-dessus.

### 1 - METHODE DE MESURE UTILISEES

### 1.1 Mesure des masses molaires moyennes en nombre (Mn), en poids (Mw) et de l'indice de polydispersité pour les élastomères étendus ou non à la résine

On utilise la chromatographie d'exclusion stérique ou SEC (Size Exclusion Chromatography). La SEC permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un élastomère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.

### Préparation de l'échantillon d'élastomère à tester:

Il n'y a pas de traitement particulier de l'échantillon de l'élastomère avant analyse. Celui-ci est simplement solubilisé à une concentration d'environ 1 g/l, dans du chloroforme ou dans le mélange suivant : tétrahydrofurane + 1 % vol. de diisopropylamine + 1 % vol. de triéthylamine + 1 % vol. d'eau distillée (% vol. =% volume). Puis, la solution est filtrée sur filtre de porosité 0,45 µm avant injection.

### Analyse SEC:

L'appareillage utilisé est un chromatographe « WATERS alliance ». Le solvant d'élution est le mélange suivant : tétrahydrofurane + 1 % vol. de diisopropylamine + 1 % vol. de triéthylamine ou du chloroforme selon le solvant utilisé pour la mise en solution de l'élastomère. Le débit est de 0,7 ml/min, la température du système de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ».

Le volume injecté de la solution de l'échantillon de l'élastomère est 100 µL. Le détecteur est un réfractomètre différentiel « WATERS 2410 » de longueur d'onde 810 nm. Le logiciel d'exploitation des données chromatographiques est le système «WATERS EM POWER».

Les masses molaires moyennes calculées sont relatives à une courbe d'étalonnage réalisée à partir de polystyrènes étalons commerciaux « PSS READY CAL-KIT ».

### 1.2 Mesure des masses molaires moyennes en nombre (Mn), en poids (Mw) et de l'indice de polydispersité pour des résines hydrocarbonées plastifiantes

La macrostructure (Mw, Mn et Ip) de la résine plastifiante est également déterminée par chromatographie d'exclusion stérique (SEC) selon le protocole suivant.

### Préparation de l'échantillon de résine plastifiante à tester:

Il n'y a pas de traitement particulier de l'échantillon de résine plastifiante avant analyse. Celle-ci est simplement solubilisée à une concentration d'environ 1 g/l, dans du tétrahydrofurane. Puis, la solution est filtrée sur filtre de porosité 0,45 µm avant injection.

### Analyse SEC:

L'appareillage utilisé est un chromatographe « WATERS ALLIANCE 2695 ». Le solvant d'élution est le tétrahydrofurane sans antioxydant. Le débit est de 1 ml/min, la température du système de 35°C et la durée d'analyse de 45 min.

On utilise un jeu de quatre colonnes Agilent en série, de dénominations commerciales « PL GEL MIXED D », « PL GEL MIXED E ». Ce jeu est composé de 2 colonnes PL GEL Mixed D en série suivi de 2 colonnes PL GEL Mixed E en série.

Le volume injecté de la solution de l'échantillon de résine plastifiante est 100 µL. Le détecteur est un réfractomètre différentiel « WATERS 2410 » de longueur d'onde 810 nm. Le logiciel d'exploitation des données chromatographiques est le système «WATERS EM POWER».

Les masses molaires moyennes calculées sont relatives à une courbe d'étalonnage réalisée à partir de polystyrènes étalons commerciaux de la société PSS polymer de dénomination commerciale « PSS READY CAL-KIT PSS-pskitr11 » et d'un étalon de polystyrène 162 g/mol de la société PSS polymer de dénomination commerciale «PSS-ps162 ».

### 1.3 Mesure de la température de transition vitreuse

La température de transition vitreuse Tg est mesurée au moyen d'un calorimètre différentiel (« differential scanning calorimeter »). L'analyse est réalisée selon les requis de la norme ASTM D3418-08 (2008).

### 1.4 Détermination de la microstructure des élastomères par spectroscopie RMN ¹H

Les déterminations des taux des différentes unités monomères et de leurs microstructures au sein de l'élastomère sont réalisées par une analyse RMN. Les spectres sont acquis sur un spectromètre 500 MHz BRUKER AVANCE équipé d'une sonde « Broad Band » BBIz-grad 5 mm. L'expérience RMN ¹H quantitative, utilise une séquence simple impulsion 30° et un délai de répétition de 5 secondes entre chaque acquisition. Les échantillons sont solubilisés dans le chloroforme CDCl₃.

### 1.5 Détermination de la quantité de résine hydrocarbonée plastifiante dans l'élastomère étendu à la résine

La détermination de la quantité de résine plastifiante dans l'élastomère étendu à la résine s'effectue également par analyse chromatographie d'exclusion stérique (SEC).

### Préparation de l'échantillon d'élastomère étendu à la résine à tester :

Il n'y a pas de traitement particulier de l'échantillon d'élastomère étendu à la résine avant analyse. Celui-ci est simplement solubilisé à une concentration d'environ 1 g/l, dans du tétrahydrofurane avec antioxydant BHT à 250 ppm. Puis, la solution est filtrée sur filtre de porosité 0,45 µm avant injection.

### Analyse SEC :

L'appareillage utilisé est un chromatographe « WATERS Alliance 2695». Le solvant d'élution est le tétrahydrofurane avec antioxydant BHT à 250 ppm. Le débit est de 1 mL/min, la température du système de 35°C et la durée d'analyse de 35 min.

On utilise un jeu de 3 colonnes Agilent en série, de dénominations commerciales «PLgel MIXED-D» et «PLgel MIXED-E». Ce jeu est composé de 2 colonnes Agilent PL GEL Mixed D et d'une colonne Agilent PL GEL Mixed E en série.

Le volume injecté de la solution de l'échantillon d'élastomère étendu à la résine est 100 µL. Le détecteur est un réfractomètre différentiel «WATERS 2410», de longueur d'onde 810 nm, le logiciel d'exploitation des données chromatographiques est le système «WATERS EMPOWER».

Des calibrants à l'aide d'un élastomère non étendu à la résine de même microstructure que l'élastomère étendu à la résine sont utilisés. Ces calibrants sont préparés dans du tétrahydrofurane avec antioxydant BHT 250 ppm (BHT hydroxytoluène butylé). Plusieurs calibrants sont réalisés à partir d'un élastomère non étendu à la résine à des concentrations en g/l précisément connues de manière à obtenir une gamme étalon. Chaque calibrant est injecté à 100 µL dans le système chromatographique. A l'aide du logiciel de retraitement des données, chaque pic de calibrant est intégré. Il est alors possible de connaitre l'aire totale du pic de chaque calibrant. Une droite de calibration est ensuite construite en traçant l'aire du pic du calibrant en fonction de la concentration.

L'élastomère étendu à la résine est alors injecté à la suite de la réalisation de la droite de calibration. Les signaux de la résine et de l'élastomère étant séparés à l'aide des colonnes SEC, on peut donc réaliser une quantification. Le pic obtenu pour l'élastomère est alors intégré à l'aide du logiciel de retraitement de données ; l'aire dudit pic est ensuite reportée sur la droite de calibration précédemment construite. Il est ensuite possible de déduire la concentration élastomère en g/L dans l'élastomère étendu à l'huile (C_{élasto}). La concentration de l'élastomère étendu à la résine et mis en solution est connue (C_{éch}).

La quantification du taux de résine est donc réalisée de manière indirecte par la relation suivante : Taux de résine = 1 - C_{élasto}/C_{éch}

### 1.6 Détermination de la viscosité Mooney ML₍₁₊₄₎ à 100°C selon la norme ASTM D-1646 pour les élastomères

Un consistomètre est utilisé tel que décrit dans la norme ASTM D-1646. La mesure de viscosité Mooney se fait selon le principe suivant: l'élastomère est moulé dans une enceinte cylindrique chauffée à 100 °C. Après une minute de préchauffage, le rotor tourne au sein de l'éprouvette à 2 tr.min⁻¹ et le couple utile pour entretenir ce mouvement après 4 minutes de rotation est mesuré. La viscosité Mooney (ML₍₁₊₄₎) est exprimée en «Unité Mooney» (UM, avec 1 UM = 0,83 N.m).

### 1.7 Détermination du pouvoir collant d'une composition de caoutchouc non vulcanisée

Le collant des compositions de caoutchouc sont mesurées au moyen d'une mesure de tack qui porte aussi le nom d'un test d'adhérence, appelé test de « probe-tack ». Le test probe-tack correspond à un test de contact entre une surface (une sonde) et un adhésif (la composition). Le test est effectué à une température de 70°C correspondant à la température de la composition de caoutchouc et de la surface ; la composition n'étant pas vulcanisée. On enregistre la variation de la force appliquée en fonction du déplacement. L'analyse est réalisée selon les requis de la norme ASTM D2979-01 (2009).

Les résultats sont exprimés en base 100. La valeur en base 100 pour l'échantillon à tester est calculée selon l'opération : (valeur de la force maximale en newtons pour séparer la sonde de l'adhésif/échantillon à tester/valeur de la force maximale en newtons pour séparer la sonde de l'adhésif/témoin) × 100). De cette façon, un résultat inférieur à 100 indique une diminution du pouvoir collant qui corrobore une meilleure processabilité de la composition.

### 1.8 Mesure de la surface spécifique BET et CTAB de la silice

La surface spécifique BET de la silice est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,2].

Les valeurs de surface spécifique CTAB (S_{CTAB}) ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la silice.

### 2 - DESCRIPTION DETAILLEE DE L'INVENTION

Dans la présente description, sauf indication expresse différente, tous les tous les pourcentages (%) indiqués sont des pourcentages en masse.

D'autre part, tout intervalle de valeurs désigné par l'expression « entre a et b » représente le domaine de valeurs allant de plus de « a » à moins de « b » (c'est-à-dire bornes a et b exclues) tandis que tout intervalle de valeurs désigné par l'expression « de a à b » signifie le domaine de valeurs allant de « a » jusqu'à « b » (c'est-à-dire incluant les bornes strictes a et b).

Dans la présente demande, on entend « pce » (usuellement « phr » en anglais) la partie en poids d'un constituant pour cent parties en poids d'élastomères.

Dans le cadre de l'invention, les produits carbonés mentionnés dans la description peuvent être d'origine fossile ou biosourcée. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

### 2.1 - Elastomère étendu à la résine

L'invention a pour objet un élastomère étendu à la résine, dont l'élastomère est un élastomère diénique synthétique ayant une masse molaire moyenne en nombre comprise dans un domaine allant de 250000 g/mol à 450000 g/mol et dont la résine est une résine hydrocarbonée plastifiante et dont le taux de résine hydrocarbonée plastifiante est compris dans un domaine allant de 30 à 100 pce, l'élastomère étendu à la résine étant obtenu par mélangeage de l'élastomère diénique synthétique en solution dans un solvant organique et de la résine hydrocarbonée plastifiante à l'état liquide et l'élastomère étendu à la résine présentant un indice de viscosité Mooney supérieur ou égal à 40 UM.

Par « élastomère étendu à la résine», on entend au sens de la présente invention un matériau de type composite, solide, formé d'un élastomère et d'une résine intimement mélangés l'un avec l'autre.

### Elastomère

Un premier constituant de l'élastomère étendu à la résine conforme à l'invention est un élastomère diénique synthétique ayant une masse molaire moyenne en nombre comprise dans un domaine allant de 250000 g/mol à 450000 g/mol.

Par « élastomère (ou indistinctement « caoutchouc »; les deux termes étant considérés comme synonymes) du type diénique », doit être compris de manière connue un élastomère (on entend un ou plusieurs élastomères) constitué au moins en partie (i.e., un homopolymère ou un copolymère) d'unités monomères diènes (monomères porteurs de deux doubles liaisons carbone-carbone, conjuguées ou non).

Les élastomères diéniques peuvent être classés dans deux catégories : «essentiellement insaturés» ou «essentiellement saturés». On entend en général par «essentiellement insaturé», un élastomère diénique issu au moins en partie de monomères diènes conjugués, ayant un taux de motifs ou unités d'origine diénique (diènes conjugués) qui est supérieur à 15 % (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques « essentiellement saturés » (taux de motifs d'origine diénique faible ou très faible, toujours inférieur à 15 % (% en moles)). Dans la catégorie des élastomères diéniques « essentiellement insaturés », on entend en particulier par élastomère diénique « fortement insaturé » un élastomère diénique ayant un taux de motifs d'origine diénique (diènes conjugués) qui est supérieur à 50% (% en mole).

Par «élastomère synthétique », on entend au sens de la présente invention, un élastomère obtenu par synthèse chimique à partir de monomères biosourcés ou bien issus de la chimie du pétrole. Un élastomère synthétique se distingue donc du caoutchouc naturel qui est un élastomère diénique naturel.

Ces définitions étant données, on entend plus particulièrement par élastomère diénique synthétique susceptible d'être utilisé dans l'élastomère étendu à la résine conforme à l'invention:
(a) tout homopolymère d'un monomère diène conjugué, notamment tout homopolymère obtenu par polymérisation d'un monomère diène conjugué ayant de 4 à 12 atomes de carbone;
(b) tout copolymère obtenu par copolymérisation d'un ou plusieurs diènes conjugués entre eux ou avec un ou plusieurs composés vinyle aromatique ayant de 8 à 20 atomes de carbone;
(c) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) un copolymère d'isobutène et d'isoprène (caoutchouc butyle), ainsi que les versions halogénées, en particulier chlorées ou bromées, de ce type de copolymère,
(e) tout copolymère obtenu par copolymérisation d'un ou plusieurs diènes conjugués avec l'éthylène, une α-monooléfine aliphatique acyclique ayant 3 à 18 atomes de carbone ou leur mélange comme par exemple ceux décrits dans le document WO 2005/028526, WO 2004/035639 et WO 2007/054224.

Bien qu'elle s'applique à tout type d'élastomère diénique synthétique, l'homme du métier comprendra que la présente invention est de préférence mise en oeuvre avec des élastomères diéniques essentiellement insaturés, en particulier du type (a) ou (b) ci-dessus.

Préférentiellement, l'élastomère diénique synthétique comprend au moins un monomère diénique conjugué ayant de 4 à 12 atomes de carbone.

Il peut donc s'agir d'un homopolymère de monomères diéniques conjugués ayant de 4 à 12 atomes de carbone ou bien d'un copolymère résultant de la polymérisation de monomères diéniques conjugués ayant de 4 à 12 atomes de carbone avec un autre monomère polymérisable.

Préférentiellement, le monomère diénique conjugué ayant 4 à 12 atomes de carbone de l'élastomère diénique synthétique est choisi dans le groupe constitué par le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, le 1,3-pentadiène, le 2,4-hexadiène et les mélanges de ces monomères.

Plus préférentiellement, le monomère diénique conjugué ayant 4 à 12 atomes de carbone est choisi dans le groupe constitué par le butadiène-1,3, le 2-méthyl-1,3-butadiène et les mélanges de ces monomères.

L'autre monomère polymérisable avec les monomères diéniques conjugués ayant de 4 à 12 atomes de carbone (première monomère) peut être :
- un monomère diénique conjugué ayant de 4 à 12 atomes de carbone différent du premier monomère ;
- un monomère vinylaromatique ayant de 8 à 20 atomes de carbone ;
- un monomère alpha-oléfine tel que le propylène, le 1-butène, l'isobutylène, le pentène, le méthylpentène, le 1-héxène ;
- l'éthylène ; et
- un mélange de ces monomères.

Préférentiellement, l'autre monomère polymérisable est un monomère vinylaromatique ayant de 8 à 20 atomes de carbone. Ainsi l'élastomère diénique synthétique utilisable dans l'élastomère étendu à la résine conforme à l'invention comprend en outre au moins un monomère vinylaromatique ayant de 8 à 20 atomes de carbone. Dans ce cas, il s'agit d'un copolymère.

A titre monomères vinylaromatique ayant de 8 à 20 atomes de carbone conviennent notamment les monomères styréniques, à savoir tout monomère comprenant du styrène, non substitué comme substitué. Parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène), le para-tertio-butylstyrène, les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'o-bromostyrène, le m-bromostyrène, le p-bromostyrène, le 2,4-dibromostyrène, le 2,6-dibromostyrène ou les 2,4,6-tribromostyrène), les fluorostyrènes (par exemple l'o-fluorostyrène, le m-fluorostyrène, le p-fluorostyrène, le 2,4-difluorostyrène, le 2,6-difluorostyrène ou les 2,4,6-trifluorostyrène) ou encore le para-hydroxy-styrène.

Plus préférentiellement, le monomère vinylaromatique ayant de 8 à 20 atomes est choisi dans le groupe constitué par le styrène, l'ortho-méthylstyrène, le méta-méthylstyrène, le para-méthylstyrène, le mélange commercial «vinyle-toluène», le para-tertiobutylstyrène, les méthoxystyrènes, les chlorostyrènes, le vinylmésitylène, le divinylbenzène, le vinylnaphtalène et les mélanges de ces monomères.

Plus préférentiellement encore, le monomère vinylaromatique ayant de 8 à 20 atomes de carbone est le styrène.

En résumé, l'élastomère diénique synthétique utilisable dans le cadre de l'invention est préférentiellement choisi dans le groupe constitué par les polybutadiènes (en abrégé «BR»), les polyisoprènes de synthèse (en abrégé «IR»), les copolymères de butadiène, les copolymères d'isoprène et les mélanges de ces élastomères. De tels copolymères sont plus préférentiellement choisis dans le groupe constitué par les copolymères de butadiène-styrène (en abrégé «SBR»), les copolymères d'isoprène-butadiène (en abrégé «BIR»), les copolymères d'isoprène-styrène (en abrégé «SIR»), et les copolymères d'isoprène-butadiène-styrène (en abrégé «SBIR»).

Préférentiellement, l'élastomère diénique synthétique utilisable dans l'élastomère étendu à la résine conforme à l'invention est un copolymère butadiène-styrène.

Dans le cas des copolymères du type (b), ceux-ci peuvent contenir de 20 à 99% en poids d'unités diéniques et de 1 à 80% en poids d'unités vinylaromatiques.

Préférentiellement, lorsque l'élastomère diénique synthétique utilisable dans le cadre de la présente invention comprend des monomères vinylaromatiques ayant de 8 à 20 atomes de carbone (notamment ce monomère est le styrène), le taux de ce monomère est compris dans un domaine allant de 3 à 20 % en poids par rapport au poids total de l'élastomère, plus préférentiellement allant de 5 à 16 % en poids par rapport au poids total de l'élastomère.

Préférentiellement, lorsque l'élastomère diénique synthétique utilisable dans le cadre de la présente invention comprend des monomères vinylaromatiques ayant de 8 à 20 atomes de carbone (notamment ce monomère est le styrène) et des monomères butadiène-1,3, le taux d'unités butadiénique 1,2-vinyl est compris dans un domaine allant de 4 à 30 % en poids par rapport au poids total de la partie polybutadiène, plus préférentiellement allant de 5 à 25 % en poids par rapport au poids total de de la partie polybutadiène.

Les élastomères diéniques synthétiques utilisables dans le cadre de la présente invention peuvent avoir toute microstructure qui est fonction des conditions de polymérisation utilisées, notamment de la présence ou non d'un agent modifiant et/ou randomisant et des quantités d'agent modifiant et/ou randomisant employées.

Les élastomères diéniques synthétiques utilisables dans le cadre de la présente invention peuvent être par exemple à blocs, statistiques, séquencés, microséquencés, et sont synthétisés solution ; ils peuvent être couplés et/ou étoilés ou encore fonctionnalisés avec un agent de couplage et/ou d'étoilage ou de fonctionnalisation. Préférentiellement, dans le cas d'un copolymère à base de monomères diéniques conjugués ayant de 4 à 12 atomes de carbone (notamment le butadiène 1,3) et de monomères vinylaromatiques ayant de 8 à 20 atomes de carbone (notamment le styrène), ces deux monomères sont répartis statistiquement le long de la chaîne polymère.

Dans un mode de réalisation de l'invention, les élastomères diéniques synthétiques utilisables dans le cadre de la présente invention peuvent être des élastomères diéniques synthétiques fonctionnalisés par une fonction choisie dans le groupe constitué par les groupes fonctionnels comportant une liaison carbone-étain, les groupes fonctionnels aminés, les groupes fonctionnels comportant un silanol, les groupes fonctionnels comportant un alkoxysilane, les groupes carboxyliques, les groupes polyéthers, les groupes époxydes et les mélanges de ces derniers.

Pour un couplage à du noir de carbone, on peut citer par exemple des groupes fonctionnels comprenant une liaison C-Sn ou des groupes fonctionnels aminés tels que aminobenzophénone par exemple. Pour un couplage à une charge inorganique renforçante telle qu'une silice, on peut citer par exemple des groupes fonctionnels silanol ou polysiloxane ayant une extrémité silanol (tels que décrits par exemple dans FR2740778 ou US6013718, et WO2008/141702), des groupes alkoxysilane (tels que décrits par exemple dans FR2765882 ou US5977238), des groupes carboxyliques (tels que décrits par exemple dans WO01/92402 ou US6815473, WO2004/096865 ou US2006/0089445) ou encore des groupes polyéthers (tels que décrits par exemple dans EP1 127909 ou US6503973, WO2009/000750 et WO2009/000752). On peut aussi citer comme élastomères fonctionnels ceux préparés par l'utilisation d'un amorceur fonctionnel, notamment ceux portant une fonction amine ou étain (voir par exemple WO2010/072761). Comme autres exemples d'élastomères fonctionnalisés, on peut citer également des élastomères (tels que SBR, BR, ou IR de synthèse) du type époxydés.

Préférentiellement, cette fonction est choisie dans le groupe constitué par les groupes fonctionnels comportant une liaison carbone-étain, les groupes fonctionnels aminés, les groupes fonctionnels comportant un silanol, les groupes fonctionnels comportant un alkoxysilane.

Plus préférentiellement encore, cette fonction est choisie dans le groupe constitué par les groupes fonctionnels comportant un silanol et les groupes fonctionnels comportant un alkoxysilane.

Le groupe fonctionnel portant la fonction peut se situer en bout de chaîne, c'est-à-dire à une extrémité de la chaîne élastomère principale linéaire. On dira alors que l'élastomère diénique est fonctionnalisé « en bout de chaîne » ou « en extrémité de chaîne ». C'est généralement un élastomère obtenu par réaction d'un élastomère vivant sur un agent de fonctionnalisation, c'est-à-dire toute molécule au moins monofonctionnelle, la fonction étant tout type de groupement chimique connu par l'homme de l'art pour réagir avec un bout de chaîne vivant.

Ce groupement chimique peut se situer dans la chaîne élastomère principale linéaire. On dira alors que l'élastomère diénique est couplé ou encore fonctionnalisé « en milieu de chaîne », par opposition à la position « en bout de chaîne » et bien que le groupement ne se situe pas précisément au milieu de la chaîne élastomère. C'est généralement un élastomère obtenu par réaction de deux chaînes de l'élastomère vivant sur un agent de couplage, c'est-à-dire toute molécule au moins difonctionnelle, la fonction étant tout type de groupement chimique connu par l'homme de l'art pour réagir avec un bout de chaîne vivant.

Ce groupement peut être central auquel n chaînes élastomères (n>2) sont liées formant une structure en étoile de l'élastomère. On dira alors que l'élastomère diénique est étoilé. C'est généralement un élastomère obtenu par réaction de n chaînes de l'élastomère vivant sur un agent d'étoilage, c'est-à-dire toute molécule multifonctionnelle, la fonction étant tout type de groupement chimique connu par l'homme de l'art pour réagir avec un bout de chaîne vivant.

L'homme du métier comprendra qu'une réaction de fonctionnalisation avec un agent comprenant plus d'une fonction réactive vis-à-vis de l'élastomère vivant, résulte en un mélange d'espèces fonctionnalisées en bout de chaîne et en milieu de chaîne, constituant les chaînes linéaires de l'élastomère diénique fonctionnalisé, ainsi que le cas échéant d'espèces étoilées. Selon les conditions opératoires, principalement le rapport molaire de l'agent de fonctionnalisation aux chaînes vivantes, certaines espèces sont majoritaire dans le mélange.

Préférentiellement, les élastomères diéniques synthétiques utilisable dans le cadre de la présente invention sont porteurs de groupement fonctionnel milieu de chaîne ou bout de chaîne, plus préférentiellement bout de chaîne.

Les élastomères diéniques synthétiques utilisables dans le cadre de la présente invention présentent une haute masse molaire moyenne en nombre Mn, c'est à dire une Mn comprise dans un domaine allant de 250000 g/mol à 450000 g/mol. L'homme du métier sait comment adapter les conditions de synthèse des élastomères diéniques synthétiques pour obtenir de telles Mn. La Mn est mesurée selon la méthode décrite au paragraphe 1.1.

Préférentiellement, les élastomères diéniques synthétiques utilisables dans le cadre de la présente invention sont des élastomères de basse Tg. Par basse Tg, on entend une Tg inférieure ou égale à -60°C. L'homme du métier sait comment adapter la microstructure des élastomères diéniques synthétiques pour obtenir de telles Tg. Il est entendu que la Tg de l'élastomère diénique synthétique entrant dans la formulation de l'élastomère étendu à la résine se mesure sur l'élastomère diénique synthétique préalablement à son mélange avec la résine hydrocarbonée plastifiante. La Tg est mesurée selon la méthode décrite au paragraphe 1.3.

Préférentiellement, les élastomères diéniques synthétiques utilisables dans le cadre de la présente invention ont une Tg comprise dans un domaine allant de -110°C à - 60°C, plus préférentiellement allant de -95°C à -65°C.

Les élastomères diéniques synthétiques utilisables dans le cadre de la présente invention sont obtenus par polymérisation en solution, de préférence en polymérisation en solution homogène. On peut utiliser tout type de polymérisation en solution bien connu de l'homme du métier tel que par exemple la polymérisation anionique, la polymérisation de coordination.

La polymérisation en solution est bien connue de l'homme du métier et se différencie de la polymérisation en émulsion (ou en milieu dispersé) en ce que les monomères utilisés et l'élastomère en cours de synthèse sont solubles dans le solvant de polymérisation. A l'issue de la réaction de polymérisation, l'élastomère formé est également soluble dans le solvant de polymérisation et est récupéré par évaporation dudit solvant ou par filtration. Dans ce type de polymérisation, le solvant de polymérisation est très souvent un solvant hydrocarboné. Au contraire, dans une polymérisation en émulsion, le solvant de polymérisation est de l'eau ou bien une solution aqueuse et le monomère polymérisable est insoluble dans ce solvant de polymérisation. Il se forme alors des micelles dans lesquels s'effectue la réaction de polymérisation. A l'issue d'une polymérisation en émulsion (ou en milieu dispersé) on obtient un élastomère sous forme de latex, c'est-à-dire une émulsion stable de particules d'élastomère dans une solution aqueuse. Les élastomères synthétiques diéniques utilisables dans le cadre de la présente invention synthétisés en solution ne se présentent donc pas sous forme de latex.

### Résine hydrocarbonée plastifiante

Le deuxième constituant de l'élastomère étendu à la résine conforme à l'invention est une résine hydrocarbonée plastifiante.

De manière connue de l'homme du métier, la dénomination « résine » est réservée dans la présente demande, par définition, à un composé qui est solide à température ambiante (23°C), par opposition à un plastifiant liquide à température ambiante tel qu'une huile.

Les résines plastifiantes sont des polymères bien connus de l'homme du métier. Ce sont des résines hydrocarbonées essentiellement à base de carbone et hydrogène mais pouvant comporter d'autres types d'atomes, utilisables en particulier comme agents plastifiants ou agents tackifiants dans des matrices polymériques. Elles sont par nature miscibles (i.e., compatibles) aux taux utilisés avec les compositions d'élastomère(s) diénique(s) auxquelles elles sont destinées, de manière à agir comme de véritables agents diluants. Elles ont été décrites par exemple dans l'ouvrage intitulé « Hydrocarbon Resins » de R. Mildenberg, M. Zander et G. Collin (New York, VCH, 1997, ISBN 3-527-28617-9) dont le chapitre 5 est consacré à leurs applications, notamment en caoutchouterie pneumatique (5.5. « Rubber Tires and Mechanical Goods »). Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Elles sont préférentiellement exclusivement hydrocarbonées, c'est-à-dire qu'elles ne comportent que des atomes de carbone et d'hydrogène. Leur Tg est de préférence supérieure ou égale à 0°C, de préférence supérieure ou égale à 20°C (le plus souvent comprise dans un domaine allant de 30°C à 95°C). Dans la présente demande, les expressions « résines plastifiantes », « résines hydrocarbonées » et « résines hydrocarbonées plastifiantes» sont interchangeables.

De manière connue, ces résines hydrocarbonées plastifiantes peuvent être qualifiées aussi de résines thermoplastiques en ce sens qu'elles se ramollissent par chauffage et peuvent ainsi être moulées. Elles peuvent se définir également par un point ou température de ramollissement (en anglais, « softening point »). La température de ramollissement d'une résine hydrocarbonée plastifiante est généralement supérieure d'environ 50°C à 60°C à sa valeur de Tg. Le point de ramollissement est mesuré selon la norme ISO 4625 de 2012 (méthode « Ring and Ball »).

Préférentiellement, la résine hydrocarbonée plastifiante utilisable dans le cadre de la présente invention présente une Tg supérieure ou égale à 0°C de préférence supérieure ou égale à 20°C, de préférence supérieure ou égale à 30°C (en particulier entre 30°C et 95°C). Il est entendu que la Tg de la résine hydrocarbonée plastifiante entrant dans la formulation de l'élastomère étendu à la résine conforme à l'invention se mesure sur la résine hydrocarbonée plastifiante préalablement à son mélange avec l'élastomère diénique synthétique. La Tg de la résine hydrocarbonée plastifiante est mesurée selon la méthode décrite au paragraphe 1.3.

Préférentiellement, la résine hydrocarbonée plastifiante utilisable dans le cadre de la présente invention présente un point de ramollissement supérieur ou égal à 50°C (en particulier compris entre 50°C et 150°C) mesuré selon la norme ISO 4625 de 2012 (méthode «Ring and Ball»).

Préférentiellement, la résine hydrocarbonée plastifiante utilisable dans le cadre de la présente invention présente une masse molaire moyenne en nombre (Mn) comprise entre 400 et 2000 g/mol, préférentiellement entre 500 et 1500 g/mol. La Mn de la résine hydrocarbonée plastifiante est mesurée selon la méthode décrite au paragraphe 1.2.

Préférentiellement, la résine hydrocarbonée plastifiante utilisable dans le cadre de la présente invention présente un indice de polymolécularité (Ip) inférieur à 3 (rappel : Ip = Mw/Mn avec Mw masse molaire moyenne en poids).

Plus préférentiellement, la résine hydrocarbonée plastifiante utilisable dans le cadre de la présente invention peut présenter une Tg supérieure ou égale à 20°C, de préférence supérieure ou égale à 30°C et une Mn comprise entre 400 et 2000 g/mol, préférentiellement entre 500 et 1500 g/mol.

Plus préférentiellement, les résines hydrocarbonées plastifiantes utilisables dans le cadre de la présente invention peuvent présenter l'ensemble des caractéristiques préférentielles ci-dessus.

Préférentiellement, la résine hydrocarbonée plastifiante utilisable dans le cadre de la présente invention est choisie dans le groupe constitué par les résines aliphatiques, les résines aromatiques et les mélanges de ces résines.

A titres d'exemples de telles résines hydrocarbonées plastifiantes utilisables dans le cadre de la présente invention, on peut citer celles choisies dans le groupe constitué par les résines d'homopolymères ou copolymères de cyclopentadiène (en abrégé CPD), les résines d'homopolymères ou copolymères de dicyclopentadiène (en abrégé DCPD), les résines d'homopolymères ou copolymères de terpène, les résines d'homopolymères ou copolymères de coupe C5, les résines d'homopolymères ou copolymères de coupe C9, les mélange de résines d'homopolymères ou copolymères de coupe C5 et de résines d'homopolymères ou copolymères de coupe C9, les résines d'homopolymères ou copolymères d'alpha-méthyl-styrène et les mélanges de ces résines.

Parmi les résines hydrocarbonées plastifiantes de copolymères ci-dessus, on peut citer plus particulièrement celles choisies dans le groupe constitué par les résines de copolymères CPD/vinylaromatique, les résines de copolymères DCPD/vinylaromatique, les résines de copolymères CPD/terpène, les résines de copolymères DCPD/terpène, les résines de copolymères terpène phénol, les résines de copolymères CPD/coupe C5, les résines de copolymères DCPD/coupe C5, les résines de copolymères CPD/coupe C9, les résines de copolymères DCPD/coupe C9, les mélange de résines de coupe C5 et de coupe C9, les résines de copolymères terpène/vinylaromatique, les résines de copolymères terpène/phénol, les résines de copolymère coupe C5/vinylaromatique, et les mélanges de ces résines.

Le terme « terpène » regroupe ici de manière connue les monomères alphapinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre.

A titre de monomère vinylaromatique conviennent par exemple le styrène, l'alpha-méthylstyrène, l'ortho-méthylstyrène, le méta-méthylstyrène, le para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C9 (ou plus généralement d'une coupe C8 à C10).

Plus préférentiellement encore, les résines hydrocarbonées plastifiante utilisables dans le cadre de la présente invention sont une résine de copolymères coupe C5/ coupe C9 ou un mélange de ces résines.

Toutes les résines hydrocarbonées plastifiante ci-dessus sont bien connues de l'homme du métier et disponibles commercialement, par exemple vendues par la société DRT sous la dénomination « Dercolyte » pour ce qui concerne les résines polylimonène, par la société Neville Chemical Company sous dénomination « Super Nevtac », par Kolon sous dénomination « Hikorez » ou par la société Exxon Mobil sous dénomination « Escorez » pour ce qui concerne les résines coupe C5/ styrène ou résines coupe C5/ coupe C9, ou encore par la société Struktol sous dénomination « 40 MS » ou « 40 NS » (mélanges de résines aromatiques et/ou aliphatiques).

### Elastomère étendu à la résine

Le mélange intime d'un élastomère diénique synthétique tel que décrit ci-dessus (y compris ses modes préférés de réalisation) et d'une résine hydrocarbonée plastifiante telle que décrite ci-dessus (y compris ses modes préférés de réalisation) permet d'obtenir un nouveau matériau : un élastomère étendu à la résine. Etant donné que les deux constituants de ce matériau sont intimement mélangés l'un à l'autre, on obtient une seule (unique) valeur de Tg lorsqu'on mesure ce paramètre pour l'élastomère étendu à la résine. Cette Tg de l'élastomère étendu à la résine est différente de celle de l'élastomère diénique synthétique et de celle de la résine hydrocarbonée plastifiante mesurées avant leur mélange. De manière surprenante, cet élastomère étendu à la résine présente une bonne viscosité Mooney, présumant d'une bonne processabilité. L'élastomère étendu à la résine conforme à l'invention présente l'avantage de pouvoir être utilisé pour la fabrication de composition de caoutchouc, notamment destinées à la fabrication de pneumatique. Son utilisation dans ce type de compositions permet une meilleure processabilité de la composition dans les différents outils de mélangeage. Il limite le collant des compositions de caoutchouc le contenant par rapport à une composition de caoutchouc comprenant un élastomère de même microstructure mais non étendu à la résine et le même taux de résine hydrocarbonée. Ainsi, la composition de caoutchouc comprenant l'élastomère étendu à la résine conforme à l'invention a une meilleure processabilité et n'endommage pas ou très peu les outils de mélangeage.

L'élastomère étendu à la résine conforme à la présente invention présente une viscosité Mooney (mesurée selon la méthode décrite au paragraphe 1.6) supérieure ou égale à 40 UM (avec UM = unité Mooney et 1 UM = 0,83 N.m), plus préférentiellement comprise dans un domaine allant de 50 à 75 UM.

Le taux de résine hydrocarbonée plastifiante dans l'élastomère étendu à la résine est compris dans un domaine allant de 30 à 100 pce, de préférence de 30 à 80 pce.

L'élastomère étendu à la résine conforme à l'invention est obtenu par mélangeage de l'élastomère diénique synthétique en solution dans un solvant organique et de la résine hydrocarbonée plastifiante à l'état liquide.

Par « élastomère diénique synthétique en solution », on entend au sens de la présente invention une solution homogène d'un élastomère diénique synthétique, c'est-à-dire que le solvant organique et ledit élastomère ne forme qu'une seule phase visible à l'oeil nu. Il n'y a pas de précipité ni de suspension de particules dudit élastomère dans la solution.

Le solvant organique peut être tout solvant compatible avec les monomères de l'élastomère diénique synthétique, avec l'élastomère diénique synthétique et avec la résine hydrocarbonée plastifiante. De préférence, le solvant organique est aliphatique ou alicyclique. On peut citer à titre d'exemple, le n-pentane, l'isopentane, les isoamylènes (2-méthyl-2-butène, 2-méthyl-1-butène et 3-méthyl-1-butène), le 2,2-diméthylbutane, le 2,2 diméthyl-propane (néopentane), le n-heptane, le n-octane, l'iso-octane, le cyclopentane, le cyclohexane, le n-hexane, le méthylcyclopentane et le méthylcyclohexane, ainsi que les mélanges de ces composés. On peut également citer à titre de solvant organique, les hydrocarbures aromatiques comme par exemple le benzène ou le toluène.

Par « résine hydrocarbonée plastifiante à l'état liquide » on entend au sens de la présente invention, une résine hydrocarbonée plastifiante qui à température ambiante est à l'état solide et qui a subi un processus pour passer à l'état liquide. Par exemple, la résine hydrocarbonée plastifiante peut être chauffée, selon toute technique bien connue de l'homme du métier, à une température supérieure à sa température de ramollissement. Un autre exemple pour obtenir une résine hydrocarbonée plastifiante à l'état liquide consiste à solubiliser ladite résine hydrocarbonée dans un solvant organique dans laquelle elle est compatible. Cette technique est également bien connue de l'homme du métier. Ce solvant organique peut être identique ou différent de celui dans lequel se trouve l'élastomère diénique synthétique en solution. Lorsque le solvant organique utilisé pour solubiliser la résine hydrocarbonée plastifiante est différent du solvant organique dans lequel se trouve l'élastomère diénique synthétique, alors le solvant de solubilisation de la résine doit être compatible avec celui dans lequel se trouve l'élastomère. Par compatible, on entend que le mélange de ces deux solvants ne forme qu'une seule phase visible à l'oeil nu.

### 2.2 Procédé d'obtention de l'élastomère étendu à la résine

L'invention concerne également un procédé d'obtention dudit élastomère étendu à la résine, le procédé comprenant au moins :
(a) une étape de mise en contact d'au moins un élastomère diénique synthétique en solution dans un solvant organique avec au moins une résine hydrocarbonée plastifiante, ledit élastomère diénique synthétique ayant une masse molaire moyenne en nombre comprise dans un domaine allant de 250000 g/mol à 450000 g/ mol,
(b) une étape de mélange pour obtenir une solution homogène d'élastomère diénique synthétique et de résine hydrocarbonée plastifiante,
(c) une étape de stripping à la vapeur d'eau pour récupérer une fraction gazeuse enrichie en solvant organique et une dispersion aqueuse de particules d'élastomère diénique synthétique et de résine hydrocarbonée plastifiante; et
(d) une étape de récupération de l'élastomère étendu à la résine à partir de la dispersion aqueuse de particules d'élastomère diénique synthétique et de résine hydrocarbonée plastifiante.

Ce procédé d'obtention d'un élastomère étendu à la résine peut être un procédé discontinu ou continu.

La première étape du procédé concerne la mise en contact d'au moins un élastomère diénique synthétique en solution dans un solvant organique avec au moins une résine hydrocarbonée plastifiante, ledit élastomère diénique synthétique ayant une masse molaire moyenne en nombre comprise dans un domaine allant de 250000 g/mol à 450000 g/mol. Cette mise en contact peut se faire dans tout réacteur bien connu de l'homme du métier.

Le solvant dans lequel se trouve l'élastomère diénique synthétique peut être tout solvant hydrocarboné inerte, de préférence aliphatique ou alicyclique. On peut citer à titre d'exemple, le n-pentane, l'isopentane, les isoamylènes (2-méthyl-2-butène, 2-méthyl-1-butène et 3-méthyl-1-butène), le 2,2-diméthylbutane, le 2,2 diméthyl-propane (néopentane), le n-heptane, le n-octane, l'iso-octane, le cyclopentane, le cyclohexane, le n-hexane, le méthylcyclopentane et le méthylcyclohexane, ainsi que les mélanges de ces composés. On peut également citer à titre de solvant organique, les hydrocarbures aromatiques comme par exemple le benzène ou le toluène.

Dans le procédé conforme à l'invention, l'élastomère diénique synthétique en solution dans le solvant organique peut être obtenu soit par dissolution dudit élastomère dans ledit solvant organique soit par polymérisation, en solution dans ledit solvant organique, des monomères correspondants dudit élastomère.

La dissolution de l'élastomère diénique synthétique s'effectue par n'importe quelle méthode bien connue de l'homme du métier, par exemple en plongeant les balles dudit élastomère dans un réacteur rempli du solvant organique et en agitant le milieu réactionnel, éventuellement en le chauffant également, afin d'obtenir un élastomère diénique synthétique en solution dans le solvant.

Dans une variante du procédé conforme à l'invention, l'élastomère diénique synthétique en solution est obtenu par polymérisation en solution dans ledit solvant organique des monomères correspondants dudit élastomère. Autrement dit préalablement à l'étape (a), le procédé de l'invention peut comprendre une étape (a') dans laquelle on polymérise en solution, de préférence en solution homogène (c'est-à-dire dans le solvant organique précité), à partir des monomères correspondant, un élastomère diénique synthétique. Dans cette étape (a'), de préférence, on polymérise au moins un monomère diénique conjugué ayant de 4 à 12 atomes de carbone. Ce monomère diénique conjugué ayant 4 à 12 atomes de carbone peut être choisi dans le groupe constitué par le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, le 1,3-pentadiène, le 2,4-hexadiène et les mélanges de ces monomères. Plus préférentiellement, le monomère diénique conjugué ayant 4 à 12 atomes de carbone est choisi dans le groupe constitué par le butadiène-1,3, le 2-méthyl-1,3-butadiène et les mélanges de ces monomères. Selon des mises en oeuvre du procédé de l'invention, le monomère diénique conjugué ayant 4 à 12 atomes de carbone (premier monomère) peut aussi être copolymérisé avec au moins un autre monomère polymérisable, notamment qui peut être :
- un monomère diénique conjugué ayant de 4 à 12 atomes de carbone différent du premier monomère ;
- un monomère vinylaromatique ayant de 8 à 20 atomes de carbone ;
- un monomère alpha-oléfine tel que le propylène, le 1-butène, l'isobutylène, le pentène, le méthylpentène, le 1-héxène ;
- l'éthylène.

Préférentiellement, l'autre monomère polymérisable est un monomère vinylaromatique ayant de 8 à 20 atomes de carbone. A titre de composés vinylaromatiques conviennent notamment les monomères styréniques, à savoir tout monomère comprenant du styrène, non substitué comme substitué. Parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène), le para-tertio-butylstyrène, les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'o-bromostyrène, le m-bromostyrène, le p-bromostyrène, le 2,4-dibromostyrène, le 2,6-dibromostyrène ou les 2,4,6-tribromostyrène), les fluorostyrènes (par exemple l'o-fluorostyrène, le m-fluorostyrène, le p-fluorostyrène, le 2,4-difluorostyrène, le 2,6-difluorostyrène ou les 2,4,6-trifluorostyrène) ou encore le para-hydroxy-styrène. Préférentiellement, le monomère vinylaromatique ayant de 8 à 20 atomes de carbone de l'élastomère synthétique utilisable dans le procédé conforme à l'invention est choisi dans le groupe constitué par le styrène, l'ortho-méthylstyrène, le méta-méthylstyrène, le para-méthylstyrène, le mélange commercial «vinyle-toluène», le para-tertiobutylstyrène, les méthoxystyrènes, les chlorostyrènes, le vinylmésitylène, le divinylbenzène, le vinylnaphtalène et les ménages de ces monomères. Plus préférentiellement encore, le monomère vinylaromatique ayant de 8 à 20 atomes de carbone est le styrène. Ainsi, dans un mode de réalisation du procédé de l'invention, l'étape (a') du procédé est une étape dans laquelle on polymérise en solution, de préférence en solution homogène, un élastomère diénique à partir d'au moins un monomère diénique conjugué ayant de 4 à 12 atomes de carbone (de préférence ce monomère est le butadiène-1,3 ou le 2-méthyl-1,3-butadiène) et d'au moins un monomère vinylaromatique ayant de 8 à 20 atomes de carbone (de préférence le styrène).

La polymérisation peut être une polymérisation anionique ou une polymérisation en chaîne par catalyse (selon le mécanisme de coordination-insertion). Ces types de polymérisations sont bien connus de l'homme du métier et ont été abondamment décrits dans la littérature.

Brièvement, dans le cadre d'une polymérisation anionique, elle est initiée par exemple au moyen d'un initiateur de polymérisation qui peut être tout initiateur anionique, mono- ou polyfonctionnel connu. Toutefois, un initiateur contenant un métal alcalin tel que le lithium ou un alcalino-terreux tel que le baryum est utilisé à titre préférentiel. Comme initiateurs organolithiens conviennent notamment ceux comportant une ou plusieurs liaisons carbone-lithium tels que le n-butyllithium (n-BuLi), ou encore les amidures de lithium.

Brièvement, dans le cadre d'une polymérisation en chaîne par catalyse de coordination, on utilise un système catalytique à base de métal de terre rare ou de titane. De tels systèmes ont été décrits notamment dans les documents WO02/38636, WO03/097708 et WO2007/045417.

Dans une mise en oeuvre du procédé de l'invention, celui-ci peut comprendre en outre une étape (a") dans laquelle, on modifie l'élastomère diénique synthétique obtenu à l'étape (a'). Cette étape consiste à introduire une fonction chimique dans la chaîne du polymère en cours de synthèse ou en bout de chaîne. De tels procédés ont été décrits notamment dans les demandes WO2009133068 et WO2011042507.

Préférentiellement, dans le procédé conforme à l'invention, l'élastomère diénique synthétique peut être fonctionnalisé par une fonction choisie dans le groupe constitué par les groupes fonctionnels comportant une liaison carbone-étain, les groupes fonctionnels aminés, les groupes fonctionnels comportant un silanol, les groupes fonctionnels comportant un alkoxysilane, les groupes carboxyliques, les groupes polyéthers, les groupes époxydes et les mélanges de ces derniers.

Plus préférentiellement, dans le procédé conforme à l'invention, l'élastomère diénique synthétique peut être fonctionnalisé par une fonction choisie dans le groupe constitué par les groupes fonctionnels comportant une liaison carbone-étain, les groupes fonctionnels aminés, les groupes fonctionnels comportant un silanol, les groupes fonctionnels comportant un alkoxysilane et les mélanges de ces derniers.

Dans le procédé conforme à l'invention, l'élastomère diénique synthétique dissout dans le solvant organique ou obtenu à l'issue de l'étape (a') et/ou (a") présente une masse molaire moyenne en nombre comprise dans un domaine allant de 250000 g/mol à 450000 g/mol. La Mn est mesurée selon la méthode décrite au paragraphe 1.1.

Préférentiellement, dans le procédé conforme à l'invention, l'élastomère diénique synthétique dissout dans le solvant organique ou obtenu à l'issue de l'étape (a') et/ou (a") présente une température de transition vitreuse inférieure ou égale à -60°C. De préférence, ledit élastomère diénique synthétique a une température de transition comprise dans un domaine allant de -110°C à -60°C, de préférence de -95°C à -65°C. La Tg est mesurée selon la méthode décrite au paragraphe 1.3.

La résine utilisée dans le procédé de l'invention lors de l'étape (a) est une résine hydrocarbonée plastifiante. Comme indiqué précédemment, cette résine hydrocarbonée plastifiante est à l'état solide à température ambiante (23°C). Ces résines hydrocarbonées plastifiantes peuvent être qualifiées aussi de résines thermoplastiques en ce sens qu'elles se ramollissent par chauffage et peuvent ainsi être moulées. Elles peuvent se définir également par un point ou température de ramollissement (en anglais, « softening point »). La température de ramollissement d'une résine plastifiante est généralement supérieure d'environ 50 à 60°C à sa valeur de Tg. Le point de ramollissement est mesuré selon la norme ISO 4625 de 2012 (méthode «Ring and Ball»).

Préférentiellement, la résine hydrocarbonée plastifiante utilisable dans le procédé de l'invention présente une Tg supérieure ou égale à 0°C, de préférence supérieure ou égale à 20°C, de préférence supérieure ou égale à 30°C (en particulier entre 30°C et 95°C). La Tg est mesurée selon la méthode décrite au paragraphe 1.3.

Préférentiellement, la résine hydrocarbonée plastifiante utilisable dans le procédé de l'invention présente un point de ramollissement supérieur ou égal à 50°C (en particulier compris entre 50°C et 150°C) mesurée selon la norme ISO 4625 de 2012 (méthode «Ring and Ball»).

Préférentiellement, la résine hydrocarbonée plastifiante utilisable dans le procédé de l'invention présente une masse molaire moyenne en nombre (Mn) comprise entre 400 et 2000 g/mol, préférentiellement entre 500 et 1500 g/mol. La Mn est mesurée selon la méthode décrite au paragraphe 1.2

Préférentiellement, la résine hydrocarbonée plastifiante utilisable dans le procédé de l'invention présente un indice de polymolécularité (Ip) inférieur à 3 (rappel : Ip = Mw/Mn avec Mw masse molaire moyenne en poids). Plus préférentiellement, la résine hydrocarbonée plastifiante dans le procédé de l'invention peut présenter une Tg supérieure ou égale à 20°C, de préférence supérieure ou égale à 30°C et une Mn comprise entre 400 et 2000 g/mol, préférentiellement entre 500 et 1500 g/mol.

Plus préférentiellement, la résine hydrocarbonée plastifiante utilisable dans le procédé de l'invention peut présenter l'ensemble des caractéristiques préférentielles ci-dessus.

Préférentiellement, la résine hydrocarbonée plastifiante utilisable dans le procédé de l'invention est choisie dans le groupe constitué par les résines aliphatiques, les résines aromatiques et les mélanges de ces résines.

A titres d'exemples de telles résines hydrocarbonées plastifiantes utilisables dans le cadre de la présente invention, on peut citer celles choisies dans le groupe constitué par les résines d'homopolymères ou copolymères de cyclopentadiène (en abrégé CPD), les résines d'homopolymères ou copolymères de dicyclopentadiène (en abrégé DCPD), les résines d'homopolymères ou copolymères de terpène, les résines d'homopolymères ou copolymères de coupe C5, les résines d'homopolymères ou copolymères de coupe C9, les mélange de résines d'homopolymères ou copolymères de coupe C5 et de résines d'homopolymères ou copolymères de coupe C9, les résines d'homopolymères ou copolymères d'alpha-méthyl-styrène et les mélanges de ces résines.

Préférentiellement, lors de la mise en contact à l'étape (a), la résine hydrocarbonée plastifiante est à l'état liquide. Autrement dit, la résine hydrocarbonée plastifiante à l'état liquide peut donc préférentiellement être injectée, par tous moyens appropriés connus de l'homme du métier, dans la solution de solvant contenant l'élastomère diénique synthétique.

Selon un mode de réalisation du procédé de l'invention, la résine hydrocarbonée plastifiante à l'état liquide peut être obtenue en chauffant ladite résine à une température supérieure ou égale à sa température de ramollissement. Cette étape de chauffage s'effectue par tous moyens bien connus de l'homme du métier, par exemple à l'aide d'un réacteur comprenant des moyens de chauffage et d'agitation. L'homme du métier sait déterminer la température à laquelle s'effectue le chauffage et la durée de chauffage, en fonction de la résine hydrocarbonée plastifiante utilisée, afin d'obtenir une résine hydrocarbonée plastifiante à l'état liquide et dont la viscosité permet son pompage pour être utilisée dans l'étape (a). La température à laquelle s'effectue le chauffage est supérieure ou égale à la température de ramollissement de ladite résine. A titre d'exemple, la résine hydrocarbonée plastifiante peut être chauffée à une température allant de 50°C à 200°C pendant une durée comprise dans un domaine allant de 10 min à 2 heures.

Selon un autre mode de réalisation du procédé de l'invention, la résine hydrocarbonée plastifiante à l'état liquide peut être obtenue en dissolvant ladite résine dans un solvant organique identique ou différent du solvant organique dans lequel est se trouve l'élastomère diénique synthétique. L'homme du métier sait choisir le solvant approprié en fonction de la résine hydrocarbonée plastifiante utilisée. Préférentiellement, ce solvant organique peut être tout solvant hydrocarboné inerte, de préférence aliphatique ou alicyclique. On peut citer à titre d'exemple, le n-pentane, l'isopentane, les isoamylènes (2-méthyl-2-butène, 2-méthyl-1-butène et 3-méthyl-1-butène), le 2,2-diméthylbutane, le 2,2 diméthyl-propane (néopentane), le n-heptane, le n-octane, l'iso-octane, le cyclopentane, le cyclohexane, le n-hexane, le méthylcyclopentane et le méthylcyclohexane, ainsi que les mélanges de ces composés. On peut également citer à titre de solvant organique, les hydrocarbures aromatiques comme par exemple le benzène ou le toluène. Préférentiellement, le solvant organique dans lequel la résine hydrocarbonée plastifiante est dissoute est identique à celui dans lequel se trouve l'élastomère diénique synthétique. La dissolution de la résine hydrocarbonée plastifiante, peut s'effectuer à température ambiante ou bien en chauffant le mélange résine hydrocarbonée plastifiante/solvant organique. Il est entendu que lorsqu'on chauffe ce mélange, la température de chauffage ne doit pas être supérieure à la température d'ébullition du solvant organique pour éviter que ce dernier s'évapore.

L'étape de mélange du procédé conforme à l'invention (étape (b)) s'effectue par tous moyens bien connus de l'homme du métier, par exemple sous agitation et éventuellement en chauffant le milieu réactionnel. Cette étape permet d'obtenir une solution homogène d'élastomère diénique synthétique et de résine hydrocarbonée plastifiante. L'agitation peut se faire par exemple avec des mobiles d'agitations dans le réacteur. Par « solution homogène d'élastomère diénique synthétique et de résine hydrocarbonée plastifiante » au sens de la présente invention que la solution d'élastomère diénique synthétique et la résine hydrocarbonée plastifiante à l'état liquide après mélange ne forment qu'une seule phase liquide à l'oeil nu. Il n'y a pas de précipité ni de particules en suspension dans le milieu réactionnel.

Le procédé conforme à l'invention comprend ensuite une étape de stripping à la vapeur d'eau. L'étape de stripping à la vapeur d'eau est bien connue de l'homme du métier et permet de récupérer une fraction gazeuse enrichie en solvant organique et une dispersion aqueuse de particules d'élastomère diénique synthétique et de résine hydrocarbonée plastifiante. Elle s'effectue dans une colonne de stripping. L'homme du métier sait adapter, en fonction de la quantité de solvant organique et éventuellement de la quantité de monomères non convertis présents en entrée de la colonne de stripping, la quantité de vapeur d'eau à fournir pour récupérer l'élastomère sous forme d'une dispersion aqueuse de particules d'élastomère diénique synthétique et de résine hydrocarbonée plastifiante.

Au contact de la vapeur d'eau et de l'eau présent dans la colonne de stripping, l'élastomère diénique synthétique et la résine hydrocarbonée plastifiante étant tous les deux hydrophobes coagulent spontanément sous forme de particules d'élastomère diénique synthétique et de résine hydrocarbonée plastifiante. Cette coagulation permet d'emprisonner la résine hydrocarbonée dans l'élastomère diénique synthétique et de former l'élastomère étendu à la résine. Le solvant organique étant volatil, il est entrainé avec la vapeur d'eau et on obtient une fraction gazeuse enrichie en solvant organique.

Préférentiellement, cette fraction gazeuse enrichie en solvant organique, peut après traitement être recyclée vers l'étape (a). Le solvant organique recyclé peut ainsi servir en tant que solvant de polymérisation ou bien pour la solubilisation de la résine hydrocarbonée plastifiante ou de l'élastomère diénique synthétique.

L'étape de récupération de l'élastomère étendu à la résine à partir de la dispersion aqueuse de particules d'élastomère diénique synthétique et de résine hydrocarbonée plastifiante est bien connue de l'homme du métier et peut être effectuée par tout moyen conventionnel de séparation d'un solide et d'un fluide, telle qu'une décantation, une centrifugation (essorage), une filtration, un séchage. De préférence, la récupération de l'élastomère étendu à la résine s'effectue par séchage de la dispersion aqueuse de particules d'élastomère diénique synthétique et de résine hydrocarbonée plastifiante par exemple en plaçant ladite dispersion dans une étuve thermostatée ou bien en envoyant cette suspension dans un outil à cylindre. Le but de l'étape (d) est d'éliminer la solution aqueuse afin de récupérer l'élastomère étendu à la résine conforme à l'invention sous forme de solide sec.

Préférentiellement, préalablement à l'étape (d) de récupération, le procédé conforme à l'invention peut comprendre au moins une étape de lavage (c') de la dispersion aqueuse de particules d'élastomère diénique synthétique et de résine hydrocarbonée plastifiante. Cette étape facultative permet d'éliminer les impuretés résiduelles qui n'auraient pas été éliminées par exemple lors de l'étape de stripping à la vapeur d'eau.

L'élastomère étendu à la résine peut ensuite être récupéré et conditionné de manière connue en soit sous forme de balles par exemple.

De façon surprenante, l'élastomère étendu à la résine tel que défini ci-dessus (y compris ses modes de réalisations préférées) ou susceptible d'être obtenu selon le procédé défini ci-dessus (y compris ses modes de réalisations préférés), conforme à l'invention, présente une viscosité Mooney satisfaisante malgré la haute masse molaire moyenne en nombre de l'élastomère utilisé comme constituant et la présence de résine plastifiante. Cette viscosité Mooney satisfaisante est un bon indicateur du faible pouvoir collant de ce matériau. Cet élastomère étendu à la résine conforme à l'invention, peut être avantageusement utilisé, pour une application en pneumatique, dans une composition de caoutchouc renforcée dont il améliore la processabilité sur les outils de mélangeage. Cette composition de caoutchouc fait également l'objet de la présente invention.

### 2.3 Composition de caoutchouc

Ainsi, comme expliqué précédemment, un autre objet de la présente invention concerne une composition de caoutchouc à base d'au moins un élastomère étendu à la résine tel que défini ci-dessus ou susceptible d'être obtenu par le procédé tel que décrit ci-dessus et d'au moins une charge renforçante. Il doit être entendu que la composition de caoutchouc peut comprendre un ou plusieurs de ces élastomères étendu à la résine conformes à l'invention.

Par « composition à base de », on entend au sens de la présente une composition comportant le mélange et/ou le produit de réaction des différents constituants utilisés, certains de ces constituants de base étant susceptibles de, ou destinés à réagir entre eux, aux moins en partie, lors des différentes phases de fabrication de la composition, en particulier au cours de son extrusion ou lors de la phase de mélange.

Les compositions de caoutchouc conformes à l'invention peuvent se présenter à l'état réticulé ou à l'état non réticulé, autrement dit réticulable.

L'élastomère étendu à la résine conforme à l'invention y compris ses modes de réalisations préférés, peut être selon différentes variantes, utilisé seul dans les compositions ou en coupage avec au moins un autre élastomère diénique conventionnel. Préférentiellement, cet autre élastomère diénique conventionnel est choisi dans le groupe constitué par les polybutadiènes, les polyisoprènes de synthèse, le caoutchouc naturel, les copolymères de butadiène, les copolymères d'isoprènes et les mélanges de ces élastomères. De tels copolymères sont plus préférentiellement choisis dans le groupe constitué par les copolymères de butadiène-styrène, les copolymères d'isoprène-butadiène, les copolymères d'isoprène-styrène et les copolymères d'isoprène-butadiène-styrène. On peut également envisager un coupage (mélange) avec tout élastomère synthétique autre que diénique, voire avec tout autre polymère autre qu'élastomère, par exemple un polymère thermoplastique.

Les compositions de caoutchouc conformes à l'invention comprennent à titre d'élastomère étendu à la résine, un élastomère étendu à la résine dont les caractéristiques suivantes sont respectées;
- la masse molaire moyenne en nombre de l'élastomère diénique synthétique est comprise dans un domaine allant de 250000 g/mol à 450000 g/mol;
- le taux de résine hydrocarbonée plastifiante est compris dans un domaine allant de 30 à 100 pce;
- l'élastomère étendu à la résine obtenu par mélangeage de l'élastomère diénique synthétique en solution dans un solvant organique et de la résine hydrocarbonée plastifiante à l'état liquide;
et préférentiellement, pour lequel au moins une quelconque des caractéristiques suivantes est respectée :
- l'élastomère diénique synthétique comprend au moins un monomère diénique conjugué ayant de 4 à 12 atomes de carbone.
- le monomère diénique conjugué ayant 4 à 12 atomes de carbone est choisi dans le groupe constitué par le butadiène-1,3, le 2-méthyl-1,3-butadiène, les 2,3-di(alkyle en C₁-C₅)-1,3-butadiènes, le 1,3-pentadiène, le 2,4-hexadiène et les mélanges de ces monomères.
- le monomère diénique conjugué ayant 4 à 12 atomes de carbone est choisi dans le groupe constitué par le butadiène-1,3, le 2-méthyl-1,3-butadiène et les mélanges de ces monomères.
- l'élastomère diénique synthétique comprend en outre au moins un monomère vinylaromatique ayant de 8 à 20 atomes de carbone.
- le monomère vinylaromatique ayant de 8 à 20 atomes de carbone est choisi dans le groupe constitué par le styrène, l'ortho-méthylstyrène, le méta-méthylstyrène, le para-méthylstyrène, le mélange commercial « vinyle-toluène », le para-tertiobutylstyrène, les méthoxystyrènes, les chlorostyrènes, le vinylmésitylène, le divinylbenzène, le vinylnaphtalène et les mélanges de ces monomères.
- le monomère vinylaromatique ayant de 8 à 20 atomes de carbone est le styrène et le monomère diénique conjugué ayant 4 à 12 atomes de carbone est le butadiène-1,3.
- l'élastomère diénique synthétique est fonctionnalisé par une fonction choisie dans le groupe constitué par les groupes fonctionnels comportant une liaison carbone-étain, les groupes fonctionnels aminés, les groupes fonctionnels comportant un silanol, les groupes fonctionnels comportant un alkoxysilane, les groupes carboxyliques, les groupes polyéthers, les groupes époxydes et les mélanges de ces derniers.
- l'élastomère diénique synthétique est obtenu par polymérisation en solution, de préférence par polymérisation en solution homogène.
- la résine hydrocarbonée plastifiante a une masse molaire moyenne en nombre comprise entre 400 et 2000 g/mol, de préférence entre 500 et 1500 g/mol.
- la résine hydrocarbonée plastifiante est choisie dans le groupe constitué par les résines aliphatiques, les résines aromatiques et les mélanges de ces résines.
- la résine hydrocarbonée plastifiante est choisi dans le groupe constitué par les résines d'homopolymères ou copolymères de cyclopentadiène, les résines d'homopolymères ou copolymères de dicyclopentadiène, les résines d'homopolymères ou copolymères de terpène, les résines d'homopolymères ou copolymères de coupe C5, les résines d'homopolymères ou copolymères de coupe C9, les mélange de résines d'homopolymères ou copolymères de coupe C5 et de résines d'homopolymères ou copolymères de coupe C9, les résines d'homopolymères ou copolymères d'alpha-méthyl-styrène et les mélanges de ces résines.
- le taux de résine hydrocarbonée plastifiante est compris dans un domaine allant de 30 à 80 pce.

Les compositions de caoutchouc de l'invention comprennent au moins une charge renforçante.

On peut utiliser tout type de charge renforçante connue pour ses capacités à renforcer une composition de caoutchouc utilisable pour la fabrication de pneumatiques, par exemple une charge organique, une charge inorganique renforçante ou encore un coupage de ces deux types de charge.

Comme charge organique, on peut notamment citer les noirs de carbone, les charges organiques de polyvinyle fonctionnalisé telles que décrites dans les demandes WO2006/069792, WO2006/069793, WO 2008/003434 et WO2008/003435.

Comme noir de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère, notamment isoprénique, sous la forme d'un masterbatch (voir par exemple demandes WO 97/36724 ou WO 99/16600).

Par « charge inorganique renforçante », doit être entendu dans la présente demande, par définition, toute charge inorganique ou minérale (quelles que soient sa couleur et son origine naturelle ou de synthèse), encore appelée charge « blanche », charge « claire » voire « charge non noire » (« non-black filler ») par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée.

Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface spécifique BET ainsi qu'une surface spécifique CTAB toutes deux inférieures à 450 m²/g, de préférence de 30 à 400 m²/g, la surface spécifique BET et la surface spécifique CTAB étant mesurée comme indiquée ci-dessus. Peuvent notamment être utilisées des silices dites hautement dispersibles (dites « HDS ») telles que par exemple les silices Ultrasil 7000 de la société Evonik, les silices Zeosil^{®} 1165 MP et Zeosil^{®} 1115 MP de la société Solvay, la silice Zeosil^{®} Premium 200MP de la société Solvay, la silice Hi-Sil EZ150G de la société PPG, les silices Zeopol 8715, 8745 ou 8755 de la Société Huber, les silices telles que décrites dans les demandes WO03/016215 et WO03/016387.

Bien entendu, on entend également par charge inorganique renforçante des mélanges de différentes charges renforçantes, en particulier de charges siliceuses hautes dispersibles telles que décrites précédemment.

De manière préférentielle, le taux de charge renforçante totale (noir de carbone et/ou autre charge renforçante telle que de la silice) est compris dans un domaine allant de 10 à 200 pce, plus préférentiellement allant de 30 à 180 pce, plus préférentiellement allant de 50 à 160 pce, l'optimum étant de manière connu différent selon les applications particulières visées.

Selon une variante de l'invention, la charge renforçante est majoritairement autre que du noir de carbone, c'est-à-dire qu'elle comprend plus de 50% en poids du poids total de la charge renforçante, d'une ou plusieurs charges renforçantes autres que du noir de carbone, notamment une charge inorganique renforçante telle que la silice, voire elle est exclusivement constitué d'une telle charge.

Selon cette variante, lorsque du noir est également présent, il peut être utilisé à un taux inférieur à 20 pce, plus préférentiellement inférieure à 10 pce. Par exemple dans cette variante, le taux de noir de carbone peut être compris dans un domaine allant de 0,5 à 20 pce, de préférence dans un domaine allant de 1 à 10 pce.

Selon une autre variante de l'invention, on utilise une charge renforçante comportant majoritairement du noir de carbone, et optionnellement de la silice ou une autre charge renforçante inorganique.

Lorsque la charge renforçante comprend une charge nécessitant l'utilisation d'un agent de couplage pour établir une liaison entre la charge renforçante et l'élastomère, les compositions de caoutchouc conformes à l'invention comprennent en outre, de manière classique, un agent de couplage susceptible d'assurer efficacement cette liaison. Par exemple, lorsque la silice est présente dans la composition à titre de charge renforçante inorganique, on peut utiliser comme agents de couplage des organosilanes, notamment des alkoxysilanes polysulfurés ou des mercaptosilanes, ou encore des polyorganosiloxanes au moins bifonctionnels. Par exemple, l'agnt de couplage de la charge avec l'élastomère peut être le tétrasulfure de bis(3-triéthoxysilylpropyl) (en abrégé TESPT).

Un tel agent de couplage ne doit pas être confondu avec les agents de couplages utilisés pour la synthèse de l'élastomère synthétique diénique utilisé comme constituant de base pour former l'élastomère étendu à la résine.

Dans les compositions selon l'invention, le taux d'agent de couplage est avantageusement inférieur à 20 pce, étant entendu qu'il est en général souhaitable d'en utiliser le moins possible. Son taux est préférentiellement compris dans un domaine allant de 0,5 à 12 pce. La présence de l'agent de couplage dépend de celle de la charge inorganique renforçante. Le taux d'agent de couplage de la charge renforçante inorganique avec l'élastomère est aisément ajusté par l'homme du métier selon le taux de cette charge ; Il est typiquement de l'ordre de 0,5 % à 15 % en poids par rapport au poids de la charge inorganique renforçante autre que le noir de carbone.

Les compositions de caoutchouc selon l'invention peuvent comprendre en outre, au moins un système de réticulation à base soit de soufre, soit de donneurs de soufre et/ou de peroxyde et/ou de bismaléimides, des accélérateurs de vulcanisation, des activateurs de vulcanisation.

De préférence, le système de réticulation est de préférence un système de vulcanisation c'est-à-dire un système à base de soufre (ou d'un agent donneur de soufre) et d'un accélérateur primaire de vulcanisation. A ce système de vulcanisation de base peuvent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine), ou encore des retardateurs de vulcanisation connus.

Lorsque le soufre est utilisé, il est utilisé à un taux préférentiel compris dans un domaine allant de 0,5 à 12 pce, en particulier de 1 à 10 pce. L'accélérateur primaire de vulcanisation peut être utilisé à un taux préférentiel compris dans un domaine allant de 0,5 à 10 pce, plus préférentiellement compris dans un domaine allant de 0,5 à 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé « MBTS »), disulfure de tetrabenzylthiurame (« TBZTD »), N-cyclohexyl-2-benzothiazyle sulfénamide (« CBS »), N,N-dicyclohexyl-2-benzothiazyle sulfénamide (« DCBS »), N-ter-butyl-2-benzothiazyle sulfénamide (« TBBS »), N-ter-butyl-2-benzothiazyle sulfénimide (« TBSI »), dibenzyldithiocarbamate de zinc (« ZBEC ») et les mélanges de ces composés.

Les compositions de caoutchouc conformes à l'invention telle que décrites précédemment permettent à elles seules de répondre au problème technique posé, en particulier elles collent peu aux outils de mélangeage..

Toutefois, les compositions de caoutchouc selon l'invention peuvent également contenir, en complément des agents de couplage de la charge renforçante inorganique avec l'élastomère, des activateurs de couplage, des agents de recouvrement des charges ou plus généralement des agents d'aide à la mise en oeuvre susceptible de manière connue, grâce à une amélioration de la dispersion de la charge dans la composition et à un abaissement de la viscosité des compositions, d'améliorer sa faculté de mise en oeuvre à l'état cru, ces agents étant par exemple des silanes hydrolysables, tels que des alkylakoxysilanes, des polyols, des polyéthers, des amines primaires, secondaires ou tertiaires, des polyorganosiloxanes hydroxylés ou hydrolysables.

Préférentiellement, la composition de caoutchouc conforme à l'invention peut comprendre, en plus de la résine hydrocarbonée plastifiante déjà présente dans l'élastomère étendu à la résine, une autre résine hydrocarbonée plastifiante identique ou différente de celle présente dans l'élastomère (résine additionnelle).

Préférentiellement, le taux total de résine plastifiante (résine présente dans l'élastomère étendu à la résine et éventuellement résine additionnelle) dans la composition de caoutchouc selon l'invention est compris dans un domaine allant de 5 à 100 pce, de préférence allant de 30 à 90 pce. L'homme du métier sait comment parvenir à ce taux totale de résine plastifiante dans les compositions de caoutchouc.

Les compositions de caoutchouc conformes à l'invention peuvent également comporter tout ou partie des additifs usuels habituellement utilisés dans les compositions d'élastomères destinées à la fabrication de pneumatiques, comme par exemple des pigments, des charges non renforçantes, des agents de protection tels que des cires antiozones, des anti-ozonants chimiques, des anti-oxydants, des agents anti-fatigues, des agents plastifiants, des accepteurs ou des donneurs de méthylène (par exemple HMT ou H3M) tels que décrits par exemple dans la demande WO02/10269, un système de réticulation.

### Procédé d'obtention de la composition

Les compositions de caoutchouc conformes à l'invention peuvent être fabriquées dans des mélangeurs appropriés, en utilisant deux phases de préparation successives selon une procédure générale bien connue de l'homme du métier : une première phase de travail ou malaxage thermomécanique (parfois qualifiée de phase « non-productive ») à haute température, jusqu'à une température maximale comprise entre 110°C et 190°C, de préférence entre 130°C et 180°C, suivie d'une seconde phase de travail mécanique (parfois qualifiée phase dite « productive ») à plus basse température, typiquement inférieure à 110°C, par exemple entre 40°C et 100°C, phase de finition au cours de laquelle est incorporé le système de réticulation (de préférence le système de vulcanisation).

Ainsi, la présente description décrit un procédé de préparation d'une composition selon l'invention qui comprend :
(i) la réalisation, à une température maximal comprise entre 130°C et 180°C d'un premier temps de travail thermo-mécanique des constituants de la composition qui comprenant au moins une charge renforçante et au moins un élastomère étendu à la résine tel que défini ci-dessus, à l'exception d'un système de réticulation ;
(ii) la réalisation, à une température inférieure à ladite température maximale dudit premier temps, d'un second temps de travail mécanique au cours duquel est incorporé ledit système de réticulation.

Ce procédé peut également comprendre, préalablement à la réalisation des étapes (i) et (ii) précitées, les étapes du procédé d'obtention dudit élastomère étendu à la résine selon le procédé décrit plus haut.

Plus précisément, la première phase (non-productive, étape(i)) est conduite préférentiellement en plusieurs étapes thermomécaniques. Au cours d'une première étape on introduit, dans un mélangeur approprié tel qu'un mélangeur interne usuel, le ou les élastomère(s) étendu(s) à la résine, la ou les charge(s) renforçante(s), éventuellement les plastifiants (y compris l'ajout de résine plastifiante additionnelle et éventuellement les agents de couplage et/ou d'autres ingrédients) à l'exception du système de vulcanisation, à une température comprise entre 20°C et 100°C et, de préférence, entre 25°C et 100°C. Après quelques minutes, préférentiellement de 0,5 à 2 min et une montée de la température à 90°C à 100°C, les autres ingrédients (c'est-à-dire, ceux qui restent si tous n'ont pas été mis au départ) sont ajoutés en une fois ou par parties, à l'exception du système de vulcanisation durant un mélangeage allant de 20 secondes à quelques minutes. La durée totale du malaxage, dans cette phase non-productive, est de préférence comprise entre 2 et 10 minutes à une température inférieure ou égale à 180°C, et préférentiellement inférieure ou égale à 170°C.

Après refroidissement du mélange ainsi obtenu, on incorpore alors le système de réticulation (de préférence le système de vulcanisation) à basse température (typiquement inférieure à 100°C), généralement dans un mélangeur externe tel qu'un mélangeur à cylindres; le tout est alors mélangé (phase productive, étape (ii)) pendant quelques minutes, par exemple entre 5 et 15 min.

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé pour la fabrication de produits semi-finis afin d'obtenir des produits tels qu'une bande de roulement. Ces produits peuvent ensuite être utilisés pour la fabrication de pneumatiques, selon les techniques connues de l'homme du métier, à savoir en superposant les couches de produits semis-finis les unes sur les autres avant cuisson du pneumatique

La réticulation (ou cuisson ou encore vulcanisation) est conduite de manière connue à une température généralement comprise entre 130°C et 200°C, sous pression, pendant un temps suffisant qui peut varier par exemple entre 5 et 90 min en fonction notamment de la température de cuisson, du système de vulcanisation adopté, de la cinétique de vulcanisation de la composition considérée ou encore de la taille du pneumatique.

### 2.4 - Produit semi-fini et pneumatique

L'invention a également pour objet un produit semi-fini pour pneumatique comprenant au moins un élastomère étendu à la résine tel que décrit ci-dessus y compris ses modes de réalisation préférés ou susceptible d'être obtenu selon le procédé décrit ci-dessus y compris ses modes de réalisation préférés.

L'invention a également pour objet un produit semi-fini pour pneumatique comprenant au moins une composition de caoutchouc telle que décrite ci-dessus y compris ses modes de réalisation préférés.

En raison de la viscosité de l'élastomère étendu à la résine qui est favorable pour une bonne processabilité des compositions de caoutchouc le contenant, on notera que ces compositions peuvent être utilisées dans tout produit semi-fini pour pneumatique bien connu de l'homme du métier tel que par exemple une bande de roulement.

L'invention a également pour objet un pneumatique comprenant au moins un élastomère étendu à la résine tel que décrit ci-dessus y compris ses modes de réalisation préférés ou susceptible d'être obtenu selon le procédé décrit ci-dessus y compris ses modes de réalisation préférés.

L'invention a également pour objet un pneumatique comprenant au moins une composition telle que décrit ci-dessus

Le pneumatique de l'invention peut être notamment destiné à équiper des véhicules. Ces véhicules peuvent être des véhicules à moteur de type tourisme, des SUV (« *Sports Utility Vehicles* »), des deux roues (notamment motos), des avions, comme des véhicules industriels choisis parmi camionnettes, « Poids-lourd » - c'est-à-dire métro, bus, engins de transport routier (camions, tracteurs, remorques), des véhicules hors-la-route tels qu'engins agricoles ou de génie civil -, autres véhicules de transport ou de manutention.

### 3 - EXEMPLES

Les exemples qui suivent illustrent l'invention sans toutefois la limiter.

### 3.1 - Essai 1 :

Cet essai a pour but de démontrer les propriétés améliorées en terme de processabilité d'un élastomère étendu à la résine par rapport à un élastomère étendu témoin et des élastomères non étendus.

### 3.1.1 - Synthèse des élastomères étudiés

Deux élastomères non étendus à la résine et deux élastomères étendus à la résine sont synthétisés selon les protocoles décrits ci-dessous. La température de transition vitreuse des élastomères servant de produit de départ, des résines plastifiantes servant de produit de départ et la température de transition vitreuse des élastomères étendu à la résine sont mesurées selon la méthode décrite au paragraphe 1.3. Les masses molaires moyennes en nombre de l'élastomère et de la résine plastifiante sont mesurées respectivement selon la méthode décrite au paragraphe 1.1 et 1.2. Les viscosités ont été mesurées selon la méthode décrite dans le paragraphe 1.6. Le taux de résine plastifiante dans les élastomères étendus à la résine a été mesuré selon la méthode décrite dans le paragraphe 1.5.

### Elastomère A (hors invention)

Dans un réacteur de 85 litres, maintenu sous une pression d'azote de 2 bars, contenant 48,4 kg de méthylcyclohexane, sont injectés 5,5 kg de butadiène et 1,7 kg de styrène, ainsi que 525 ppm (678 mL) de tétrahydrofurane (THF). Après neutralisation des impuretés dans la solution à polymériser par addition de n-butyllithium, sont ajoutés 1,162 L de n-butyllithium à 0,014 mol/L. Le milieu réactionnel prend alors une coloration jaune. La polymérisation est conduite à 50 °C. Après 45 minutes, le taux de conversion des monomères atteint 68 %. Ce taux est déterminé par pesée d'un extrait sec à 140 °C, sous la pression réduite de 200 mm de Hg.

Les chaînes polymères sont alors fonctionnalisées par l'ajout d'hexaméthylcyclotrisiloxane dans le réacteur à hauteur de 0,4 équivalent molaire par rapport au bout de chaîne lithium. La fonctionnalisation est effectuée à 60°C pendant 30 minutes.

Les chaînes polymères sont neutralisées par addition de 0,9 partie pour cent parties d'élastomères (pce) de 4,4'-méthylène-bis-2,6-tert-butylphénol et de 0,2 partie pour cent parties d'élastomères (pce) de N-(1,3-diméthylbutyl)-N'-phényl-p-phénylènediamine. A l'issue de l'étape de neutralisation, on obtient une solution homogène de copolymère styrène-butadiène fonctionnalisé dans le solvant organique.

L'élastomère fonctionnalisé est séparé de sa solution par une opération de stripping à la vapeur d'eau pour récupérer une dispersion de particules élastomère dans une solution aqueuse. Cette dispersion est séchée sur outils à cylindre à 100°C pendant 15 minutes.

A l'issue de l'étape de séchage, on récupère l'élastomère A dont les caractéristiques sont présentées dans le tableau I.

### Elastomère B (hors invention)

Dans un réacteur de 85 litres, maintenu sous une pression d'azote de 2 bars, contenant 48,4 kg de méthylcyclohexane, sont injectés 5,5 kg de butadiène et 1,7 kg de styrène, ainsi que 525 ppm (678 mL) de THF. Après neutralisation des impuretés dans la solution à polymériser par addition de n-butyllithium, sont ajoutés 1,162 L de n-butyllithium à 0,014 mol/L. Le milieu réactionnel prend alors une coloration jaune. La polymérisation est conduite à 50 °C. Après 45 minutes, le taux de conversion des monomères atteint 68 %. Ce taux est déterminé par pesée d'un extrait sec à 140 °C, sous la pression réduite de 200 mm de Hg.

Les chaînes polymères sont alors fonctionnalisées par l'ajout d'hexaméthylcyclotrisiloxane dans le réacteur à hauteur de 0,4 équivalent molaire par rapport au bout de chaîne lithium. La fonctionnalisation est effectuée à 60°C pendant 30 minutes.

Les chaînes polymères sont neutralisées par addition de 0,9 partie pour cent parties d'élastomères (pce) de 4,4'-méthylène-bis-2,6-tert-butylphénol et de 0,2 partie pour cent parties d'élastomères (pce) de N-(1,3-diméthylbutyl)-N'-phényl-p-phénylènediamine. A l'issue de l'étape de neutralisation, on obtient une solution homogène de copolymère styrène-butadiène fonctionnalisé dans le solvant organique.

La solution de copolymère dans le méthylcyclohexane est ensuite transférée dans un réacteur de 450 Litres et agitée pendant 15 minutes. Une solution de 2,34 Kg de résine « Escorez 2173 » dissoute dans 4 litres de méthylcyclohexane est ensuite ajoutée à la solution de copolymère. La solution de copolymère et de résine est agitée pendant deux heures à température ambiante sous une pression d'azote de 0,4 bar avec une vitesse d'agitation de 400 tr/min. On obtient ainsi une solution homogène de copolymère styrène butadiène fonctionnalisé et de résine dans un solvant.

Cette solution homogène de copolymère styrène-butadiène fonctionnalisé et de résine est ensuite soumise à une opération de stripping à la vapeur d'eau afin de récupérer une dispersion de particules élastomère/résine dans une solution aqueuse. Cette dispersion est séchée sur outils à cylindre à 100°C pendant 15 minutes.

A l'issue de l'étape de séchage, on récupère l'élastomère B étendu à la résine dont les caractéristiques sont présentées dans le tableau I

La résine hydrocarbonée plastifiante est disponible commercialement auprès de Exxon Mobil sous la référence « Escorez 2173 ». Ses caractéristiques sont les suivantes :
- masse molaire moyenne en nombre d'environ 770 g/mol,
- résine plastifiante issue d'une coupe hydrocarbonée C5-C9,
- température de transition vitreuse d'environ 39,7°C (Δ T : 13°C),
- température de ramollissement d'environ 94°C.

### Elastomère C (hors invention)

Dans un réacteur de 85 litres, maintenu sous une pression d'azote de 2 bars, contenant 48,963 kg de méthylcyclohexane, sont injectés 5,23 kg de butadiène et 1,65 kg de styrène, ainsi que 525 ppm (682 mL) de THF. Après neutralisation des impuretés dans la solution à polymériser par addition de n-butyllithium, sont ajoutés 796 mL de n-butyllithium à 0,014 mol/L. Le milieu réactionnel prend alors une coloration jaune. La polymérisation est conduite à 50 °C. Après 60 minutes, le taux de conversion des monomères atteint 66,5 %. Le taux de conversion est déterminé par pesée d'un extrait sec à 140 °C, sous la pression réduite de 200 mm de Hg.

Les chaînes polymères sont alors fonctionnalisées par l'ajout d'hexaméthylcyclotrisiloxane dans le réacteur à hauteur de 0,4 équivalent molaire par rapport au bout de chaîne lithium. La fonctionnalisation est effectuée à 60°C pendant 30 minutes.

Les chaînes polymères sont neutralisées par addition de 0,9 partie pour cent parties d'élastomères (pce) de 4,4'-méthylène-bis-2,6-tert-butylphénol et de 0,2 partie pour cent parties d'élastomères (pce) de N-(1,3-diméthylbutyl)-N'-phényl-p-phénylènediamine. On obtient une solution homogène de copolymère styrène-butadiène fonctionnalisé dans du méthylcyclohexane.

L'élastomère est séparé de sa solution par une opération de stripping à la vapeur d'eau afin de récupérer une dispersion de particules élastomère dans une solution aqueuse. Cette dispersion est séchée sur outils à cylindre à 100°C pendant 15 minutes.

A l'issue de l'étape de séchage, on récupère l'élastomère C dont les caractéristiques sont présentées dans le tableau I

### Elastomère D (conforme à invention)

Dans un réacteur de 85 litres, maintenu sous une pression d'azote de 2 bars, contenant 48,963 kg de méthylcyclohexane, sont injectés 5,23 kg de butadiène et 1,65 kg de styrène, ainsi que 525 ppm (682 mL) de THF. Après neutralisation des impuretés dans la solution à polymériser par addition de n-butyllithium, sont ajoutés 796 mL de n-butyllithium à 0,014 mol/L. Le milieu réactionnel prend alors une coloration jaune. La polymérisation est conduite à 50 °C. Après 60 minutes, le taux de conversion des monomères atteint 66.5 %. Le taux de conversion est déterminé par pesée d'un extrait sec à 140 °C, sous la pression réduite de 200 mm de Hg.

Les chaînes polymères sont alors fonctionnalisées par l'ajout d'hexaméthylcyclotrisiloxane dans le réacteur à hauteur de 0,4 équivalent molaire par rapport au bout de chaîne lithium. La fonctionnalisation est effectuée à 60°C pendant 30 minutes.

Les chaînes polymères sont neutralisées par addition de 0,9 partie pour cent parties d'élastomères (pce) de 4,4'-méthylène-bis-2,6-tert-butylphénol et de 0,2 partie pour cent parties d'élastomères (pce) de N-(1,3-diméthylbutyl)-N'-phényl-p-phénylènediamine. On obtient une solution homogène de copolymère styrène-butadiène fonctionnalisé dans du méthylcyclohexane.

La solution de copolymère dans le méthylcyclohexane est ensuite transférée dans un réacteur de 450 Litres et agitée pendant 15 minutes. Une solution de 2,17 Kg de résine « Escorez 2173 » dissoute dans 4 litres de méthylcyclohexane est ensuite ajoutée à la solution de copolymère. La solution de copolymère et de résine est agitée pendant deux heures à température ambiante sous une pression d'azote de 0,4 bar avec une vitesse d'agitation de 400 tr/min. On obtient ainsi une solution homogène de copolymère styrène-butadiène fonctionnalisé et de résine dans le solvant.

Cette solution homogène de copolymère styrène-butadiène fonctionnalisé et de résine est ensuite soumise à une opération de stripping à la vapeur d'eau afin de récupérer une dispersion de particules élastomère/résine dans une solution aqueuse. Cette dispersion est séchée sur outils à cylindre à 100°C pendant 15 minutes.

A l'issue de l'étape du séchage, on obtient un élastomère D dont les caractéristiques sont présentées dans le tableau I.

### Caractéristiques des différents élastomères

**Tableau I**

| | | Elastomère A | Elastomère B | Elastomère C | Elastomère D |
|---|---|---|---|---|---|
| Masse molaire moyenne Mn (g/mol) | | 170600 | 170600 | 290000 | 290000 |
| Indice de polydispersité Ip | | 1,12 | 1,12 | 1,14 | 1,14 |
| Tg en °C | | - 65°C (ΔT= 6°C) | - 51,7°C (ΔT= 14,8° C) | - 65°C (ΔT= 6 °C) | - 51°C (ΔT= 14°C) |
| Microstructure | | | | | |
| | Taux de styrène (^{a}) | 15,1 % | 15,1 % | 14,9 % | 14,9 % |
| | Taux de butadiène 1,2 vinyl (^{b}) | 24,6 % | 24,6 % | 23,6 % | 23,6 % |
| | Taux de butadiène 1,4 (^{b}) | 75,4 % | 75,4 % | 76,4 % | 76,4% |
| Taux de résine plastifiante (en pce) | | 0 | 50 | 0 | 50 |

| | | | | | |
|---|---|---|---|---|---|
| (^{a}) : le taux de monomère est exprimé en % poids par rapport à l'ensemble du poids de l'élastomère (^{b}) : le taux de monomère est exprimé en % poids par rapport au poids de la partie polybutadiène | | | | | |

### 3.1.2 - Résultats

La processabilité de ces élastomères est évaluée en mesurant leur viscosité Mooney selon la méthode décrite au paragraphe 1.6 et les résultats sont présentés dans le tableau II. La viscosité Mooney est un paramètre bien connu de l'homme un métier. Il est généralement admis que plus la viscosité Mooney d'un élastomère est basse, plus il est difficile d'utiliser cet élastomère notamment dans des mélanges. Par ailleurs, une viscosité Mooney d'un élastomère supérieure à 100 UM. n'est également pas recherchée par les formulateurs de compositions de caoutchouc.

**Tableau II**

| | Elastomère A (hors invention) | Elastomère B étendu à la résine (hors invention) | Elastomère C (hors invention) | Elastomère D étendu à la résine (conforme à l'invention) |
|---|---|---|---|---|
| Viscosité Mooney (UM) | 40 | 23 | >100 | 71 |

| | | | | |
|---|---|---|---|---|
| 1 UM= 0,83 N.m. | | | | |

L'élastomère A (hors invention) est représentatif d'un élastomère classiquement utilisé dans les compositions de caoutchouc notamment pour la fabrication de pneumatique. Il présente une viscosité Mooney de 40 UM représentative d'une bonne aptitude de l'élastomère à être processable car peu collant.

Lorsqu'on mélange une résine plastifiante à cet élastomère A pour former l'élastomère B étendu à la résine (élastomère étendu à la résine hors invention), on observe une diminution de la viscosité Mooney à 23 UM. Cette baisse de la viscosité est n'est pas compatible avec une utilisation de ce composé dans une composition de caoutchouc. Ce composé est difficilement processable car il est très collant.

Lorsqu'on augmente la masse molaire moyenne en nombre de l'élastomère A pour obtenir l'élastomère C (élastomère hors invention), on observe également une augmentation de sa viscosité présumant d'une grande difficulté de processabilité de cet élastomère.

De manière surprenante lorsqu'on mélange une résine plastifiante à l'élastomère C, on obtient l'élastomère D étendu à la résine (élastomère étendu à la résine conforme à l'invention) qui présente une viscosité Mooney égale à 70 UM. La viscosité Mooney de l'élastomère D étendu à la résine est supérieure à celle de l'élastomère A et présume d'une bonne processabilité.

### 3.2 - Essai 2 :

Cet essai a pour but de montrer les propriétés améliorées de processabilité d'une composition selon l'invention (C1) comprenant un élastomère étendu à la résine conformément à l'invention par rapport à une composition témoin (T1) comprenant un élastomère de même microstructure mais non étendu à la résine.

### 3.2.1 - Formulation des compositions :

Les formulations des compositions T1 et C1 sont présentées dans le tableau III. Les taux des différents constituants sont exprimés en pce. Les résultats des propriétés de collants mesurés sur les compositions à cru (c'est-à-dire non vulcanisées) sont présentés dans le tableau IV.

La composition C1 selon l'invention se distingue de la composition T1 par la nature de l'élastomère : elle comprend un élastomère étendu à la résine. Les compositions C1 et T1 ont le même taux total de résine plastifiante (76 pce).

**Tableau III**

| Composition | T1 | C1 |
|---|---|---|
| Elastomère A (1) | 100 | (-) |
| Elastomère D (2) | (-) | 150 |
| Noir de carbone (3) | 7 | 7 |
| Silice (4) | 145 | 145 |
| Agent de couplage (5) | 10,9 | 10,9 |
| Huile TDAE (6) | 44 | 44 |
| Résine plastifiante (7) | 2 | 2 |
| Résine plastifiante (8) | 74 | 24 |
| Cire antiozonante | 1,5 | 1,5 |
| Anti-oxydant (9) | 2 | 2 |
| Accélérateur (10) | 2,7 | 2,7 |
| DPG (11) | 2,2 | 2,2 |
| Soufre | 1,8 | 1,8 |
| Acide stéarique | 2 | 2 |
| Oxyde de zinc | 3 | 3 |

Pour cet essai, il n'a pas été possible d'utiliser l'élastomère C dans une composition de caoutchouc car il possède une viscosité Mooney trop élevée. Il est par conséquent difficilement processable.
(1) Elastomère A obtenu selon le procédé décrit au paragraphe 3.1.1. a) et dont les caractéristiques sont reportées dans le tableau I ;
(2) Elastomère D obtenu selon le procédé décrit au paragraphe 3.1.1. d) et dont les caractéristiques sont reportées dans le tableau I ;
(3) Noir de carbone de grade N234 commercialisé par Cabot Corporation ;
(4) Silice : Silice Zeosil^{®} 1115MP commercialisé par Solvay,
(5) Agent de couplage : Bis[3-(triéthoxysilyl)propyl] Tetrasulfide silane (TESPT) commercialisé par Evonik sous la référence « Si69 » ;
(6) Huile TDAE : Huile TDAE commercialisée par la société Klaus Dahleke sous la référence 3VIVATEC500 ;
(7) Résine plastifiante: résine commercialisée par Exxon Mobil sous la référence « Escorez 1102 » ;
(8) Résine plastifiante: résine commercialisée par Exxon Mobil sous la référence « Escorez 2173 » ;
(9) Antioxydant : N-1,3-diméthylbutyl-N-phenyl-para-phénylènediamine commercialisé par Flexys sous la référence « Santoflex 6-PPD » ;
(10) Accélérateur : N-cyclohexyl-2-benzothiazyl-sulfénamide commercialisé par Flexys sous la référence « Santocure CBS » ;
(11) DPG: diphénylguanidine commercialisée par Flexys sous la référence « Perkacit ».

### 3.2.2 - Obtention des compositions :

Les compositions sont préparées selon le protocole suivant :

On introduit dans un mélangeur interne, rempli à 70% et dont la température initiale de cuve est d'environ 50°C, les élastomères étendus ou non à la résine, la charge renforçante (silice), le noir de carbone, l'agent de couplage puis, après une à deux minutes de malaxage, les divers autres ingrédients à l'exception du système de vulcanisation. On conduit alors un travail thermomécanique (phase non-productive) en une étape (durée totale du malaxage égale à environ 5 min), jusqu'à atteindre une température maximale de « tombée » d'environ 165°C.

On récupère le mélange ainsi obtenu, on le refroidit puis on ajoute le système de vulcanisation (soufre et accélérateur) sur un mélangeur externe (homo-finisseur) à 70°C, en mélangeant le tout (phase productive) pendant environ 5 à 6 min.

Les compositions ainsi obtenues sont ensuite calandrées sous la forme de plaques (épaisseur de 2 à 3 mm) pour la mesure de leurs propriétés physiques ou mécaniques avant cuisson.

### 3.2.3 - Résultats :

Les propriétés de collant (ou tack en anglais) des compositions T1 et C1 sont mesurés selon la méthode décrite au paragraphe 1.7 et présentées dans le tableau IV suivant.

**Tableau IV**

| | Composition T1 | Composition C1 |
|---|---|---|
| Collant | 100 | 36 |

Le tableau IV montre que la composition C1 comprenant un élastomère étendu à la résine conforme à la présente invention présente des propriétés de collant nettement inférieure la composition T1 représentative d'une composition de caoutchouc destinée à la fabrication de pneumatique. Ce résultat est d'autant plus surprenant que les compositions C1 et T1 ont le même taux total de résine plastifiante à savoir 76 pce.

## Revendications

1. Elastomère étendu à la résine, dont l'élastomère est un élastomère diénique synthétique ayant une masse molaire moyenne en nombre comprise dans un domaine allant de 250000 g/mol à 450000 g/mol et dont la résine est une résine hydrocarbonée plastifiante et dont le taux de résine hydrocarbonée plastifiante est compris dans un domaine allant de 30 à 100 pce, l'élastomère étendu à la résine étant obtenu par mélangeage de l'élastomère diénique synthétique en solution dans un solvant organique et de la résine hydrocarbonée plastifiante à l'état liquide et l'élastomère étendu à la résine présentant un indice de viscosité Mooney, mesurée selon la méthode décrite dans la description, supérieur ou égal à 40 UM.

2. Elastomère étendu à la résine selon la revendication 1, dans lequel l'élastomère diénique synthétique est fonctionnalisé par une fonction choisie dans le groupe constitué par les groupes fonctionnels comportant une liaison carbone-étain, les groupes fonctionnels aminés, les groupes fonctionnels comportant un silanol, les groupes fonctionnels comportant un alkoxysilane, les groupes carboxyliques, les groupes polyéthers, les groupes époxydes et les mélanges de ces derniers.

3. Elastomère étendu à la résine selon l'une quelconque des revendications 1 à 2, dans lequel l'élastomère diénique synthétique est obtenu par polymérisation en solution, de préférence par polymérisation en solution homogène.

4. Elastomère étendu à la résine selon l'une quelconque des revendications 1 à 3, dans lequel la résine hydrocarbonée plastifiante est choisie dans le groupe constitué par les résines aliphatiques, les résines aromatiques et les mélanges de ces résines.

5. Elastomère étendu à la résine selon la revendication 4, dans lequel la résine hydrocarbonée plastifiante est choisi dans le groupe constitué par les résines d'homopolymères ou copolymères de cyclopentadiène, les résines d'homopolymères ou copolymères de dicyclopentadiène, les résines d'homopolymères ou copolymères de terpène, les résines d'homopolymères ou copolymères de coupe C5, les résines d'homopolymères ou copolymères de coupe C9, les mélange de résines d'homopolymères ou copolymères de coupe C5 et de résines d'homopolymères ou copolymères de coupe C9, les résines d'homopolymères ou copolymères d'alpha-méthyl-styrène et les mélanges de ces résines.

6. Elastomère étendu à la résine selon l'une quelconque des revendications 1 à 5, dans lequel le taux de résine hydrocarbonée plastifiante est compris dans un domaine allant de 30 à 80 pce.

7. Procédé d'obtention d'un élastomère étendu à la résine, tel que défini à l'une quelconque des revendications 1 à 6, le procédé comprenant au moins :
(a) une étape de mise en contact d'au moins un élastomère diénique synthétique en solution dans un solvant organique avec au moins une résine hydrocarbonée plastifiante à l'état liquide, ledit élastomère diénique synthétique ayant une masse molaire moyenne en nombre comprise dans un domaine allant de 250000 g/mol à 450000 g/mol,
(b) une étape de mélange pour obtenir une solution homogène d'élastomère diénique synthétique et de résine hydrocarbonée plastifiante,
(c) une étape de stripping à la vapeur d'eau pour récupérer une fraction gazeuse enrichie en solvant organique et une dispersion aqueuse de particules d'élastomère diénique synthétique et de résine hydrocarbonée plastifiante; et
(d) une étape de récupération de l'élastomère étendu à la résine à partir de la dispersion aqueuse de particules d'élastomère diénique synthétique et de résine hydrocarbonée plastifiante.

8. Procédé d'obtention d'un élastomère étendu à la résine selon la revendication 7, dans lequel l'élastomère diénique synthétique de l'étape (a) est obtenu soit par dissolution dudit élastomère dans le solvant organique soit par polymérisation en solution dans le solvant organique des monomères correspondants dudit élastomère.

9. Procédé d'obtention d'un élastomère étendu à la résine selon la revendication 7 ou 8, dans lequel la résine hydrocarbonée plastifiante à l'état liquide est obtenue en chauffant ladite résine à une température supérieure ou égale à sa température de ramollissement.

10. Procédé d'obtention d'un élastomère étendu à la résine selon la revendication 7 ou 8, dans lequel la résine hydrocarbonée plastifiante à l'état liquide est obtenue en dissolvant ladite résine dans un solvant organique identique ou différent du solvant organique dans lequel se trouve l'élastomère diénique synthétique.

11. Composition à base d'au moins un élastomère étendu à la résine tel que défini selon l'une quelconque des revendications 1 à 6 ou obtenu par le procédé selon l'une des revendications 7 à 10, d'au moins une charge renforçante et d'au moins un système de réticulation chimique.

12. Produit semi-fini pour pneumatique comprenant au moins une composition telle que définie à la revendication 11.

13. Pneumatique comprenant au moins une composition telle que définie à la revendication 11.

## Patentansprüche

1. Harzverlängertes Elastomer, wobei das Elastomer ein synthetisches Dien-Elastomer mit einer zahlenmittleren Molekülmasse in einem Bereich von 250000 g/mol bis 450000 g/mol ist und wobei das Harz ein Kohlenwasserstoff-Weichmacherharz ist und wobei der Anteil an Kohlenwasserstoff-Weichmacherharz in einem Bereich von 30 bis 100 phr liegt, wobei das harzverlängerte Elastomer durch Mischen des synthetischen Dien-Elastomers in Lösung in einem organischen Lösungsmittel und des Kohlenwasserstoff-Weichmacherharzes im flüssigen Zustand erhalten wird und das harzverlängerte Elastomer eine gemäß dem in der Beschreibung beschriebenen Verfahren gemessene Mooney-Viskositätszahl von mehr als oder gleich 40 UM aufweist.

2. Harzverlängertes Elastomer nach Anspruch 1, wobei das synthetische Dien-Elastomer mit einer Funktion funktionalisiert ist, die aus der Gruppe, bestehend aus eine Kohlenstoff-Zinn-Bindung enthaltenden funktionellen Gruppen, funktionellen Amingruppen, ein Silanol enthaltenden funktionellen Gruppen, ein Alkoxysilan enthaltenden funktionellen Gruppen, Carboxylgruppen, Polyethergruppen, Epoxygruppen und deren Gemischen, ausgewählt ist.

3. Harzverlängertes Elastomer nach einem der Ansprüche 1 bis 2, wobei das synthetische Dien-Elastomer durch Lösungspolymerisation, bevorzugt durch Polymerisation in homogener Lösung, erhalten wird.

4. Harzverlängertes Elastomer nach einem der Ansprüche 1 bis 3, wobei das Kohlenwasserstoff-Weichmacherharz aus der aus aliphatischen Harzen, aromatischen Harzen und Gemischen dieser Harze bestehenden Gruppe ausgewählt ist.

5. Harzverlängertes Elastomer nach Anspruch 4, wobei das Kohlenwasserstoff-Weichmacherharz aus der Gruppe, bestehend aus Cyclopentadien-Homopolymer- oder - Copolymer-Harzen, Dicyclopentadien-Homopolymer- oder - Copolymer-Harzen, Terpen-Homopolymer- oder -Copolymer-Harzen, Fraktion-C5-Homopolymer- oder -Copolymer-Harzen, Fraktion-C9-Homopolymer- oder -Copolymer-Harzen, Gemischen von Fraktion-C5-Homopolymer- oder -Copolymer-Harzen und Fraktion-C9-Homopolymer- oder -Copolymer-Harzen, alpha-Methylstyrol-Homopolymer- oder -Copolymer-Harzen und Gemischen dieser Harze, ausgewählt ist.

6. Harzverlängertes Elastomer nach einem der Ansprüche 1 bis 5, wobei der Anteil an Kohlenwasserstoff-Weichmacherharz in einem Bereich von 30 bis 80 phr liegt.

7. Verfahren zum Erhalten eines harzverlängerten Elastomers nach einem der Ansprüche 1 bis 6, wobei das Verfahren mindestens Folgendes umfasst:
(a) einen Schritt des Inkontaktbringens mindestens eines synthetischen Dien-Elastomers in Lösung in einem organischen Lösungsmittel mit mindestens einem Kohlenwasserstoff-Weichmacherharz im flüssigen Zustand, wobei das synthetische Dien-Elastomer eine zahlenmittlere Molekülmasse in einem Bereich von 250000 g/mol bis 450000 g/mol aufweist,
(b) einen Mischschritt zum Erhalten einer homogenen Lösung von synthetischem Dien-Elastomer und Kohlenwasserstoff-Weichmacherharz,
(c) einen Dampfstrippschritt zum Gewinnen einer gasförmigen Fraktion, die an organischem Lösungsmittel angereichert ist, und einer wässrigen Dispersion von Partikeln des synthetischen Dien-Elastomers und des Kohlenwasserstoff-Weichmacherharzes und
(d) einen Schritt der Gewinnung des harzverlängerten Elastomers aus der wässrigen Dispersion von Partikeln des synthetischen Dien-Elastomers und des Kohlenwasserstoff-Weichmacherharzes.

8. Verfahren zum Erhalten eines harzverlängerten Elastomers nach Anspruch 7, wobei das synthetische Dien-Elastomer von Schritt (a) entweder durch Lösen des Elastomers in dem organischen Lösungsmittel oder durch Lösungspolymerisation entsprechender Monomere des Elastomers in dem organischen Lösungsmittel erhalten wird.

9. Verfahren zum Erhalten eines harzverlängerten Elastomers nach Anspruch 7 oder 8, wobei das Kohlenwasserstoff-Weichmacherharz im flüssigen Zustand durch Erhitzen des Harzes bei einer Temperatur über oder gleich seiner Erweichungstemperatur erhalten wird.

10. Verfahren zum Erhalten eines harzverlängerten Elastomers nach Anspruch 7 oder 8, wobei das Kohlenwasserstoff-Weichmacherharz im flüssigen Zustand durch Lösen des Harzes in einem organischen Lösungsmittel, das gleich dem organischen Lösungsmittel, in dem sich das synthetische Dien-Elastomer befindet, oder verschieden davon ist, erhalten wird.

11. Zusammensetzung auf der Basis mindestens eines harzverlängerten Elastomers nach einem der Ansprüche 1 bis 6 oder das durch das Verfahren nach einem der Ansprüche 7 bis 10 erhalten wird, mindestens eines verstärkenden Füllstoffs und mindestens eines chemischen Vernetzungssystems.

12. Halbzeug für einen Reifen, umfassend mindestens eine Zusammensetzung nach Anspruch 11.

13. Reifen, umfassend mindestens eine Zusammensetzung nach Anspruch 11.

## Claims

1. Resin-extended elastomer, the elastomer of which is a synthetic diene elastomer with a number-average molar mass in a range extending from 250 000 g/mol to 450 000 g/mol and the resin of which is a plasticizing hydrocarbon-based resin, and the content of plasticizing hydrocarbon-based resin is in a range extending from 30 to 100 phr, the resin-extended elastomer being obtained by mixing the synthetic diene elastomer in solution in an organic solvent and the plasticizing hydrocarbon-based resin in the liquid state and the resin-extended elastomer having a Mooney viscosity index of greater than or equal to 40 MU .

2. Resin-extended elastomer according to Claim 1, in which the synthetic diene elastomer is functionalized with a function chosen from the group constituted by functional groups including a carbon-tin bond, amino functional groups, functional groups including a silanol, functional groups including an alkoxysilane, carboxyl groups, polyether groups, epoxide groups and mixtures thereof.

3. Resin-extended elastomer according to any one of Claims 1 to 2, in which the synthetic diene elastomer is obtained by solution polymerization, preferably by homogeneous solution polymerization.

4. Resin-extended elastomer according to any one of Claims 1 to 3, in which the plasticizing hydrocarbon-based resin is chosen from the group constituted by aliphatic resins, aromatic resins and mixtures of these resins.

5. Resin-extended elastomer according to Claim 4, in which the plasticizing hydrocarbon-based resin is chosen from the group constituted by cyclopentadiene homopolymer or copolymer resins, dicyclopentadiene homopolymer or copolymer resins, terpene homopolymer or copolymer resins, C5 fraction homopolymer or copolymer resins, C9 fraction homopolymer or copolymer resins, mixtures of C5 fraction homopolymer or copolymer resins and of C9 fraction homopolymer or copolymer resins, α-methylstyrene homopolymer or copolymer resins, and mixtures of these resins.

6. Resin-extended elastomer according to any one of Claims 1 to 5, in which the content of plasticizing hydrocarbon-based resin is in a range extending from 30 to 80 phr.

7. Process for obtaining a resin-extended elastomer according to any one of Claims 1 to 6, the process comprising at least:
(a) one step of placing at least one synthetic diene elastomer in solution in an organic solvent in contact with at least one plasticizing hydrocarbon-based resin in the liquid state, said synthetic diene elastomer having a number-average molar mass in a range extending from 250 000 g/mol to 450 000 g/mol,
(b) one mixing step to obtain a homogeneous solution of synthetic diene elastomer and of plasticizing hydrocarbon-based resin,
(c) one steam stripping step to recover a gaseous fraction enriched in organic solvent and an aqueous dispersion of particles of synthetic diene elastomer and of plasticizing hydrocarbon-based resin; and
(d) one step of recovering the resin-extended elastomer from the aqueous dispersion of particles of synthetic diene elastomer and of plasticizing hydrocarbon-based resin.

8. Process for obtaining a resin-extended elastomer according to Claim 7, in which the synthetic diene elastomer of step (a) is obtained either by dissolution of said elastomer in the organic solvent or by solution polymerization in the organic solvent of the corresponding monomers of said elastomer.

9. Process for obtaining a resin-extended elastomer according to Claim 7 or 8, in which the plasticizing hydrocarbon-based resin in the liquid state is obtained by heating said resin to a temperature greater than or equal to its softening point.

10. Process for obtaining a resin-extended elastomer according to Claim 7 or 8, in which the plasticizing hydrocarbon-based resin in the liquid state is obtained by dissolving said resin in an organic solvent identical to or different from the organic solvent in which the synthetic diene elastomer is present.

11. Composition based on at least one resin-extended elastomer as defined according to any one of Claims 1 to 6 or obtained according to the process either of Claims 7 to 10, on at least one reinforcing filler and on at least one chemical crosslinking system.

12. Semi-finished product for a tyre, comprising at least one composition as defined in Claim 11.

13. Tyre comprising at least one composition as defined in Claim 11.
